(19) **Europäisches Patentamt**
**European Patent Office**
**Office européen des brevets**

(11) **EP 4 181 039 B1**

(12) **EUROPEAN PATENT SPECIFICATION**

(45) Date of publication and mention
of the grant of the patent:
**07.01.2026 Bulletin 2026/02**

(21) Application number: **22207671.3**

(22) Date of filing: **16.11.2022**

(51) International Patent Classification (IPC):
***G06Q 10/04*** *(2023.01)*

(52) Cooperative Patent Classification (CPC):
**G06Q 10/04**

(54) **METHODS AND SYSTEMS FOR OPTIMIZING PERSONALIZED HOSPITALITY OFFERINGS**

VERFAHREN UND SYSTEME ZUR OPTIMIERUNG VON PERSONALISIERTEN
BEWIRTUNGSANGEBOTEN

PROCÉDÉS ET SYSTÈMES D'OPTIMISATION D'OFFRES PERSONNALISÉES D'HOSPITALITÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **16.11.2021 IN 202121052596**

(43) Date of publication of application:
**17.05.2023 Bulletin 2023/20**

(73) Proprietor: **Tata Consultancy Services Limited
Maharashtra (IN)**

(72) Inventors:
• **NATARAJAN, VIJAYARANGAN
600113 Chennai, Tamil Nadu (IN)**
• **MISHRA, MAYANK
400607 Thane West, Maharashtra (IN)**
• **FURTADO, PREMRAJ
400076 Mumbai, Maharashtra (IN)**
• **SONI, GAURAV
600097 Chennai, Tamil Nadu (IN)**

(74) Representative: **Goddar, Heinz J.
Boehmert & Boehmert
Anwaltspartnerschaft mbB
Pettenkoferstrasse 22
80336 München (DE)**

(56) References cited:
**US-A1- 2021 117 998**

• **EMMANUELLEGOUILLART, 12 February 2012
(2012-02-12), XP002808959, Retrieved from the
Internet <URL:https://en.wikipedia.org/w/index.
php?title=Random_forest&oldid=476469782>
[retrieved on 20230330]**
• **JONATHAN.WARRIOR, 10 February 2020
(2020-02-10), XP002808960, Retrieved from the
Internet <URL:https://en.wikipedia.org/w/index.
php?title=XGBoost&oldid=940125243>
[retrieved on 20230330]**
• **S�NCHEZ-MEDINA AGUST�N J ET AL: "Using
machine learning and big data for efficient
forecasting of hotel booking cancellations",
INTERNATIONAL JOURNAL OF HOSPITALITY
MANAGEMENT, PERGAMON, AMSTERDAM, NL,
vol. 89, 31 May 2020 (2020-05-31), XP086215673,
ISSN: 0278-4319, [retrieved on 20200531], DOI:
10.1016/J.IJHM.2020.102546**

## Description

CROSS-REFERENCE TO RELATED APPLICATIONS AND PRIORITY

The present application claims priority to Indian application no. 202121052596, filed on November 16, 2021.

TECHNICAL FIELD

The disclosure herein generally relates to the field of hospitality management, and, more particularly, to methods and systems for optimizing personalized hospitality offerings.

BACKGROUND

Hospitality business in modern times is focused more on customers especially millennials, who frequently avail the hospitality services across the globe. This segment of customers demands customized and personalized products and the services to suit their lifestyle. However, most of the hotels follow old and traditional approach in providing the hospitality services with stand-alone products. Hence a transformation is required from the way traditional hospitality services is operated, to more versatile and dynamic hospitality services. Hospitality personalization is one of the solutions that is being driven by current market to attract the customers.

The customers in the modern arena expect beyond the core requirement of accommodation (such as room), including hotel product offerings, ancillary services such as food, spa, fitness services, recreational services, and so on. To map the customer requirements, hotels have to offer multiple ancillary products and services along with their core product offerings. However, the desired combination of the accommodation along with the multiple ancillary products and services, varies with each customer. Hence, mapping the combination of the accommodation along with the multiple ancillary products and services, is a daunting task since it differs with each customer. Conventional techniques in the art for the hospitality personalization are limited and may follow manual approaches for making the limited hospitality services and products. However, the limited hospitality services and products may not be effective for diverse customers. Further, machine learning (ML)/ artificial intelligence (AI) based conventional techniques are limited in the art and employs a single prediction model for the hospitality services and products, which may not be accurate and effective, due to scarce historical data available in unstructured manner with multiple dimensions.

Document US 2021/117998 A1 discloses modelling demand and prices for hotel rooms. Document XP002808959 refers to random forests, including an ensemble classifier that consists of many decision trees, and outputs the class that is the mode. Document XP002808960 relates to XGBoost (eXtream Gradient Boosting), an open-source software library which provides a regularized gradient gradient boosting framework for C++.

SUMMARY

Embodiments of the present disclosure represent technological improvements as solutions to one or more of the above-mentioned technical problems recognized by the inventors in conventional systems.

In an aspect, there is provided a processor-implemented method for optimizing personalized hospitality offerings, the method comprising the steps of: receiving one or more input parameters for the personalized hospitality offerings, from a guest, wherein the one or more input parameters comprising: a number of adults, a number of children, a destination country, a destination city, a type of occupancy, date and time of arrival, date and time of departure, one or more demographic particulars of each adult, one or more demographic particulars of each child, nationality of each adult, nationality of each child, a geographic location of each adult, and a geographic location of each child; identifying one or more hotels available in the destination city, based on the one or more input parameters, using a pre-trained hotel prediction model; identifying one or more vacant rooms available from the one or more hotels, based on the one or more input parameters, using a pre-trained room prediction model; identifying one or more ancillary services associated with each vacant room of the one or more vacant rooms, based on the one or more input parameters, using a pre-trained ancillary services prediction model, wherein the one or more ancillary services associated with each vacant room represents the ancillary services available with each vacant room; forming one or more relevant ancillary service bundles, for each vacant room of the one or more vacant rooms, based on the one or more ancillary services associated with each vacant room and using a mean average precision (MAP) technique; determining a fluidic pricing for each of the one or more relevant ancillary service bundles, for each vacant room of the one or more vacant rooms, using a fluidic pricing procedure; and presenting the personalized hospitality offerings to the guest, using (i) the one or more hotels, (ii) the one or more vacant rooms available from the one or more hotels, (iii) the one or more relevant ancillary service bundles for each vacant room of the one or more vacant rooms, and (iv) the fluidic pricing for each of the one or more relevant ancillary service bundles, for each vacant room of the one or more vacant rooms.

In another aspect, there is provided a system for optimizing the personalized hospitality offerings, the system comprising: a memory storing instructions; one or more Input/Output (I/O) interfaces; and one or more hardware processors coupled to the memory via the one or more I/O interfaces, wherein the one or more hardware processors are configured by the instructions to: receive one or more input parameters for the personalized hospitality offerings, from a guest, wherein the one or more input parameters comprising: a number of adults, a number of children, a destination country, a destination city, a type of occupancy, date and time of arrival, date and time of departure, one or more demographic particulars of each adult, one or more demographic particulars of each child, nationality of each adult, nationality of each child, a geographic location of each adult, and a geographic location of each child; identify one or more hotels available in the destination city, based on the one or more input parameters, using a pre-trained hotel prediction model; identify one or more vacant rooms available from the one or more hotels, based on the one or more input parameters, using a pre-trained room prediction model; identify one or more ancillary services associated with each vacant room of the one or more vacant rooms, based on the one or more input parameters, using a pre-trained ancillary services prediction model, wherein the one or more ancillary services associated with each vacant room represents the ancillary services available with each vacant room; form one or more relevant ancillary service bundles, for each vacant room of the one or more vacant rooms, based on the one or more ancillary services associated with each vacant room and using a mean average precision (MAP) technique; determine a fluidic pricing for each of the one or more relevant ancillary service bundles, for each vacant room of the one or more vacant rooms, using a fluidic pricing procedure; and present the personalized hospitality offerings to the guest, using (i) the one or more hotels, (ii) the one or more vacant rooms available from the one or more hotels, (iii) the one or more relevant ancillary service bundles for each vacant room of the one or more vacant rooms, and (iv) the fluidic pricing for each of the one or more relevant ancillary service bundles, for each vacant room of the one or more vacant rooms.

In yet another aspect, there is provided a computer program product comprising a non-transitory computer readable medium having a computer readable program embodied therein, wherein the computer readable program, when executed on a computing device, causes the computing device to: receive one or more input parameters for the personalized hospitality offerings, from a guest, wherein the one or more input parameters comprising: a number of adults, a number of children, a destination country, a destination city, a type of occupancy, date and time of arrival, date and time of departure, one or more demographic particulars of each adult, one or more demographic particulars of each child, nationality of each adult, nationality of each child, a geographic location of each adult, and a geographic location of each child; identify one or more hotels available in the destination city, based on the one or more input parameters, using a pre-trained hotel prediction model; identify one or more vacant rooms available from the one or more hotels, based on the one or more input parameters, using a pre-trained room prediction model; identify one or more ancillary services associated with each vacant room of the one or more vacant rooms, based on the one or more input parameters, using a pre-trained ancillary services prediction model, wherein the one or more ancillary services associated with each vacant room represents the ancillary services available with each vacant room; form one or more relevant ancillary service bundles, for each vacant room of the one or more vacant rooms, based on the one or more ancillary services associated with each vacant room and using a mean average precision (MAP) technique; determine a fluidic pricing for each of the one or more relevant ancillary service bundles, for each vacant room of the one or more vacant rooms, using a fluidic pricing procedure; and present the personalized hospitality offerings to the guest, using (i) the one or more hotels, (ii) the one or more vacant rooms available from the one or more hotels, (iii) the one or more relevant ancillary service bundles for each vacant room of the one or more vacant rooms, and (iv) the fluidic pricing for each of the one or more relevant ancillary service bundles, for each vacant room of the one or more vacant rooms.

In an embodiment, the pre-trained hotel prediction model is obtained by: receiving a historical hotel reservation training dataset comprising a plurality of hotel historical records, wherein each hotel historical record represents a hotel reservation data associated with a past guest and comprising at least one of: a destination country of the past guest, a destination city of the past guest, a hotel name availed by the past guest, date and time of arrival of the past guest, nationality of the past guest, type of occupancy reserved by the past guest; pre-processing the historical hotel reservation training dataset to obtain a pre-processed historical hotel reservation training dataset comprising a plurality of pre-processed hotel historical records, wherein each pre-processed hotel historical record represents a pre-processed reservation data associated with the past guest, and wherein the pre-processing comprises at least one of: cleaning, imputing missing data, and outliers removal; extracting a plurality of first features from the plurality of pre-processed hotel historical records, using a feature extraction technique, wherein each first feature is extracted from each pre-processed hotel historical record; and training a random forest model with the plurality of first features, to obtain the pre-trained hotel prediction model.

In an embodiment, the pre-trained room prediction model is obtained by: receiving a historical room reservation training dataset comprising a plurality of room historical records, wherein each room historical record represents a room reservation data associated with a past guest and comprising at least one of: a destination country of the past guest, a destination city of the past guest, a hotel name availed by the past guest, a type of occupancy availed by the past guest in the hotel, date and time of arrival of the past guest, and nationality of the past guest; pre-processing the historical room reservation training dataset to obtain a pre-processed historical room reservation training dataset comprising a plurality of pre-processed room historical records, wherein each pre-processed room historical record represents a pre-processed room reservation data associated with the past guest, and wherein the pre-processing comprises at least one of: cleaning, imputing missing data, and outliers removal; extracting a plurality of second features from the plurality of pre-processed room historical records, using a feature extraction technique, wherein each second feature is extracted from each pre-processed room historical record; and training a random forest model with the plurality of second features, to obtain the pre-trained room prediction model.

In an embodiment, the pre-trained ancillary services prediction model is obtained by: receiving a historical ancillary services reservation training dataset comprising a plurality of historical ancillary services reservation records, wherein each historical ancillary services reservation records represents an ancillary services reservation data associated with a past guest, and comprising at least one of: a destination country of the past guest, a destination city of the past guest, a hotel name availed by the past guest, date and time of arrival of the past guest, date and time of departure of the past guest, nationality of the past guest, type of occupancy availed by the past guest in the hotel, and one or more ancillary services availed by the past guest; pre-processing the historical ancillary services reservation training dataset to obtain a pre-processed historical ancillary services reservation training dataset comprising a plurality of pre-processed historical ancillary services reservation records, wherein each pre-processed historical ancillary services reservation record represents a pre-processed ancillary services reservation data associated with the past guest, and wherein the pre-processing comprises at least one of: cleaning, imputing missing data, and outliers removal; extracting a plurality of third features from the plurality of pre-processed historical ancillary services reservation records, using a feature extraction technique, wherein each third feature is extracted from each pre-processed historical ancillary services reservation record; and training a XG-boost model with the plurality of third features, to obtain the pre-trained ancillary service prediction model.

In an embodiment, the one or more relevant ancillary service bundles, for each vacant room, are formed based on the one or more ancillary services associated with each vacant room and a mean average precision (MAP) technique, by: assigning a rank to each of the one or more ancillary services associated with each vacant room, based on a population score of each of the one or more ancillary services, wherein the population score of each of the one or more ancillary services is obtained by a pre-trained population score prediction model; forming a plurality of ancillary service bundles, for each vacant room, based on the one or more ancillary services associated with each vacant room; calculating a MAP score for each ancillary service bundle of the plurality of ancillary service bundles, for each vacant room, using the rank assigned to each of the one or more ancillary services associated with the vacant room; and forming the one or more ancillary service bundles out of the plurality of ancillary service bundles, having the MAP score for each ancillary service bundle of the plurality of ancillary service bundles greater than a predefined threshold, for each vacant room; defining an average precision (AP) score, for each vacant room of the one or more vacant rooms, using an average precision technique; calculating a morphism score for each of the one or more ancillary service bundles, for each vacant room, based on the average precision (AP) score for each vacant room and the MAP score for the corresponding ancillary service bundle associated with the vacant room, using a predefined morphism criterion; and determining one or more relevant ancillary service bundles, from the one or more ancillary service bundles, based on the relevant ancillary service bundle score for each of the one or more ancillary service bundles.

In an embodiment, the fluidic pricing for each of the one or more relevant ancillary service bundles, for each vacant room of the one or more vacant rooms, is determined, using the fluidic pricing procedure, by: calculating a number of ancillary services present in each of the one or more relevant ancillary service bundles, for each vacant room of the one or more vacant rooms; calculating an ancillary services average, based on the number of ancillary services present in each of the one or more relevant ancillary service bundles, for each vacant room; calculating (i) an ancillary services standard deviation and (ii) an ancillary services variance, based on the ancillary services average; calculating (i) an ancillary services covariance and (ii) an ancillary services Fano-factor, based on the ancillary services average, the ancillary services standard deviation, and the ancillary services variance; calculating a correlation factor, based on the ancillary services covariance and the ancillary services Fano-factor, using a correlation equation; calculating (i) a lower bound, and (ii) an upper bound, for each of the one or more relevant ancillary service bundles, using the correlation factor and a MAP score associated with each of the one or more relevant ancillary service bundles; classifying each of the one or more ancillary service bundles, based on the lower bound, and the upper bound associated ancillary service bundle, to calculate a deterministic offer for each of the one or more relevant ancillary service bundles, based on the classification and a maximum deterministic offer defined for each of the one or more ancillary service bundles; determining a fluidic offer for each of the one or more relevant ancillary service bundles, based on the deterministic offer calculated for each of the one or more relevant ancillary service bundles; calculating a negotiated offer value for each of the one or more relevant ancillary service bundles, based on the deterministic offer and the fluidic offer associated with each of the one or more ancillary service bundles; calculating a stochastic offer price for each of the one or more ancillary service bundles, based on the negotiated offer value corresponding to the ancillary service bundle and an actual price value corresponding to the ancillary service bundle; calculating a relevant stochastic ancillary service bundle price for each of the one or more ancillary service bundles, based on the stochastic offer price corresponding to the ancillary service bundle and the actual price value corresponding to the ancillary service bundle; calculating a linear offer for each of the one or more relevant ancillary service bundles, based on the actual price value corresponding to the relevant ancillary service bundle and the deterministic offer corresponding to the relevant ancillary service bundle; calculating a relevant linear ancillary service bundle price for each of the one or more ancillary service bundles, based on the actual price value corresponding to the relevant ancillary service bundle and the linear offer corresponding to the relevant ancillary service bundle; and determining the fluidic pricing for each of the one or more relevant ancillary service bundles, based on (i) the relevant stochastic ancillary service bundle price for each of the one or more ancillary service bundles, and (ii) the relevant linear ancillary service bundle price for each of the one or more ancillary service bundles.

It is to be understood that both the foregoing general description and the following detailed description are exemplary and explanatory only and are not restrictive of the embodiments of the present disclosure, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an exemplary block diagram of a system for optimizing personalized hospitality offerings, in accordance with some embodiments of the present disclosure.
FIG. 2 is an exemplary block diagram illustrating modules of the system of FIG. 1 for optimizing the personalized hospitality offerings, in accordance with some embodiments of the present disclosure.
FIG. 3A and FIG. 3B illustrate exemplary flow diagrams of a processor-implemented method for optimizing the personalized hospitality offerings, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The present disclosure herein provides methods and systems for optimizing personalized hospitality offerings, to solve the technical problems for providing diverse hospitality services and products to suit based on the customer requirement. The present disclosure employs a plurality of prediction models for optimizing the personalized hospitality offerings, wherein each prediction model is separately trained on the features obtained from the unstructured historical training data. Further, a fluidic pricing mechanism is employed to provide the multiple products and services along with the offers and discounts, which may suit mostly to the diverse customers.

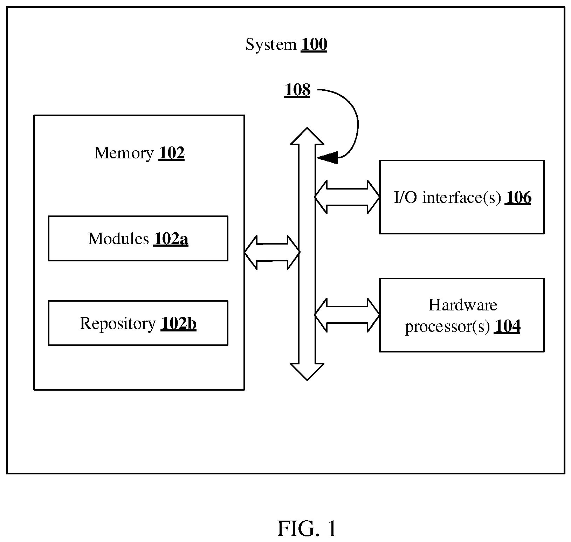

Referring now to the drawings, and more particularly to FIG. 1 through FIG. 3B, where similar reference characters denote corresponding features consistently throughout the figures, there are shown preferred embodiments and these embodiments are described in the context of the following exemplary systems and/or methods.

FIG. 1 is an exemplary block diagram of a system 100 for optimizing personalized hospitality offerings, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

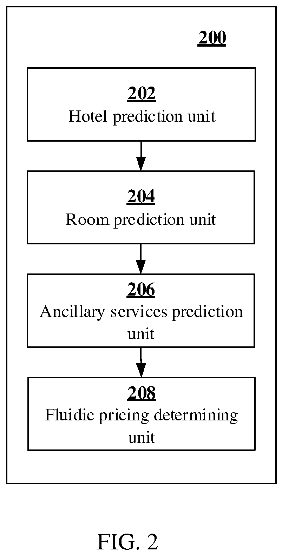

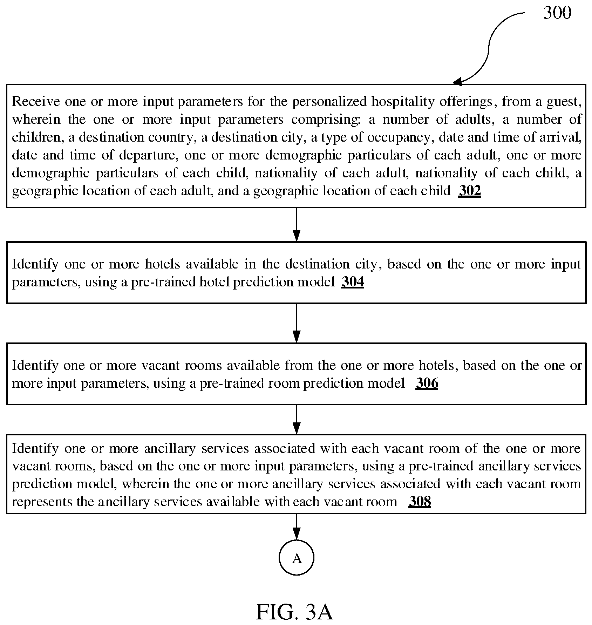

Referring collectively to FIG. 2 and FIG. 3A -3B, components and functionalities of the system 100 are described in accordance with an example embodiment of the present disclosure. For example, FIG. 2 is an exemplary block diagram illustrating modules 200 of the system 100 of FIG. 1 for optimizing the personalized hospitality offerings, in accordance with some embodiments of the present disclosure. As shown in FIG. 2, the modules 200 include a hotel prediction unit 202, a room prediction unit 204, an ancillary services prediction unit 206, and a fluidic pricing determining unit 208. In an embodiment, the modules 200 of FIG. 2 may be stored in the plurality of modules 102a comprised in the memory 102 of the system 100.

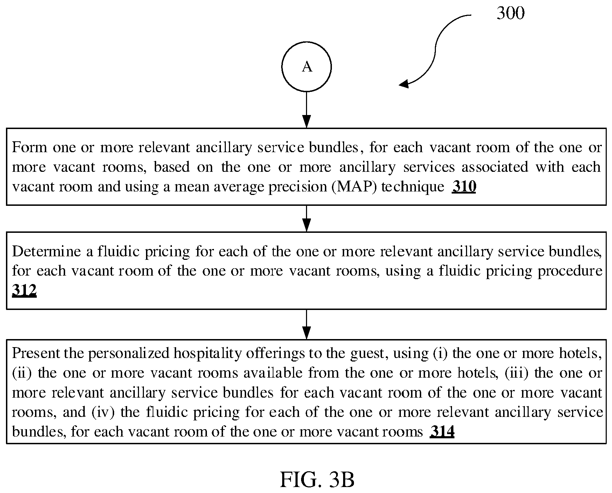

FIG. 3A and FIG. 3B illustrate exemplary flow diagrams of a processor-implemented method 300 for optimizing the personalized hospitality offerings, in accordance with some embodiments of the present disclosure. Although steps of the method 300 including process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

In the context of the present disclosure, the terms 'guest', 'customer', 'user' may be interchangeably used based on the context defines a person or an entity who wishes to book a room or an accommodation, for himself, herself, or along with the family, or for their customers, employees, and so on.

At step 302 of the method 300, the one or more hardware processors 104 of the system 100 are configured to receive one or more input parameters for optimizing the personalized hospitality offerings, from a guest. The guest may be a customer, an agent, or an entity looking for the personalized hospitality offerings. Further, the guest may book the personalized hospitality offerings for himself, or along with family members, or only for family members, or for their customers. The agent may be a third-party agent who may book the personalized hospitality offerings for their customers.

The one or more input parameters including: a number of adults, a number of children, a destination country, a destination city, a type of occupancy, date and time of arrival, date and time of departure, one or more demographic particulars of each adult, one or more demographic particulars of each child, nationality of each adult, nationality of each child, a geographic location of each adult, and a geographic location of each child. The one or more parameters defines the number of persons going to stay in a hotel, and requirement of number of rooms with specific requirements. The adult and child may be differentiated based on the age of a person and may differ for each hotel. For example, some hotels may define the age more than 8 years may treat as adult and some hotels may define the age less than 5 years may treat as child, and so on. Further, some hotels may treat infants based on their age, neither as the adult or the child.

The destination country defines the name of the country the persons are interested to stay, and the destination city defines the name of the place the persons are interested to stay in the destination country. In an embodiment, only the destination city may be requested, and the corresponding destination country may be automatically determined based on the destination city. A type of occupancy defines the occupancy type of the room and the guest may choose number of rooms required based on the type of occupancy. In an embodiment, the type of occupancy, may be single room, double room, deluxe room, luxury room, suite, deluxe suite, and so on. Each type of occupancy may have certain defined standards with defined amenities.

The date and time of arrival defines the date and time of arrival of the person for which the accommodation is required. The date and time of departure defines the date and time of departures of the persons to which the accommodation is required. The time difference between the date and time of arrival and the date and time of departure defines the number of days during which the accommodation is required. In an embodiment, only the date and time of arrival and the number of days during which the accommodation is required, may only be received instead of the date and time of departure.

The one or more demographic particulars of each adult and each child may include demographic details such as male or female, age, height, differently abled people, and so on. The nationality of each adult and the nationality of each child defines the country in which the adult of the child is born or having a permanent resident right. In an embodiment, the nationality of each adult and the nationality of each child may help to identify interests, or requirements during the stay, or a most preferred hotel in the destination city. The geographic location of each adult, and the geographic location of each child may be obtained based on a global positioning system (GPS) location or the internet protocol (IP) address present in the input device of the guest.

In an embodiment, some parameters out of the one or more input parameters may be optional, while some parameters may be mandatory. For example, the number of adults, the number of children and the date and time of arrival may be mandatory, while others are optional. In another embodiment, the number of the one or more input parameters may be same or different to each hotel. More specifically some of the one or more input parameters that are mandate for one hotel, may not be same for another hotel.

At step 304 of the method 300, the one or more hardware processors 104 of the system 100 are configured to identify one or more hotels that are available in the destination city, based on the one or more input parameters received at step 302 of the method 300. A pre-trained hotel prediction model is used to identify the one or more hotels, based on the specifications and the requirements defined by the guest in the form of the one or more input parameters. Further, the pre-trained hotel prediction model uses some of the input parameters to identify and filter the suitable hotels present in the destination city. More specifically, the pre-trained hotel prediction model may identify a predefined number of hotels having higher reputation and ratings, out of all the hotels present in the destination city. The pre-trained hotel prediction model may be stored in the hotel prediction unit 202 of FIG. 2.

The pre-trained hotel prediction model is obtained by training a random forest model with a historical hotel reservation training dataset. The historical hotel reservation training dataset includes a plurality of historical hotel records, wherein each historical hotel record represents a hotel reservation data associated with a past guest. The past guest is the customer who availed the hotel in the past for stay in the destination city. Each historical hotel record includes the information for at least one of: a destination country of the past guest, a destination city of the past guest, a hotel name availed by the past guest, date and time of arrival of the past guest, nationality of the past guest, type of occupancy reserved by the past guest.

The historical hotel reservation training dataset is pre-processed, to obtain a pre-processed historical hotel reservation training dataset including a plurality of pre-processed historical hotel records. Each pre-processed historical hotel record represents a pre-processed reservation data associated with the past guest. The pre-processing includes at least one of: cleaning, imputing missing data, and outliers removal. In an embodiment, cleaning process includes making the record in the standard process and removing the metadata available with each record. In an embodiment, the outliers removal process includes removing the record associated with the guest who availed the hotel for short duration (stay). In an embodiment, an interquartile range (IQR) technique may be employed to remove the outliers. In an embodiment, imputing the missing data includes filling the missing data by using data imputing techniques such as statistical methods.

The plurality of pre-processed historical hotel records is then used to extract a plurality of first features, wherein each first feature is extracted from each pre-processed historical hotel record. A feature extraction technique such a personalized framework is used to extract the plurality of first features from the plurality of pre-processed historical hotel records. Each first feature may include the data present in each pre-processed historical hotel record, in the form of four segments comprising customer, action, entity and context. The segment 'customer' represents the guest who takes the action (represents the segment 'action') on an entity (represents the segment 'entity', based on the context (represents the segment 'context'). For example, guest A (segment 'customer') availed (the segment 'action') a suite room (the segment 'entity') in hotel A (the segment 'entity') having a free kids game zone, as guest A staying with 2 kids (the segment 'context').

Lastly, the random forest model is trained with the plurality of first features, to obtain the pre-trained hotel prediction model. **In** each first feature, the data related to 'hotel name' is passed an output variable and the remaining data as input variables during the training process. The random forest model creates a set of decision trees from the plurality of first features and collects the votes from each decision tree based on the target variable to make the prediction in the form predefined number of hotel names present in the destination city based on the input variables.

The pre-trained hotel prediction model is validated using a hotel validation dataset and based on a hotel confusion matrix, to determine the performance and the training process may be iteratively performed until a predefined accuracy is achieved by the pre-trained hotel prediction model. The obtained pre-trained hotel prediction model after the validation is then used to identify the one or more hotels (hotel names) present in the destination city.

At step 306 of the method 300, the one or more hardware processors 104 of the system 100 are configured to identify one or more vacant rooms available from the one or more hotels identified at step 304 of the method, based on the one or more input parameters received at step 302 of the method 300. A pre-trained room prediction model is used to identify the one or more rooms from the one or more hotels, based on the specifications and the requirements defined by the guest in the form of the one or more input parameters. Further, the pre-trained room prediction model uses some of the input parameters out of the one or more input parameters, to identify and filter the suitable rooms present in each identified hotel. More specifically, the pre-trained room prediction model considers the number of adults, the number of children, date and time of arrival, and the type of occupancy to predict the vacant rooms available in each hotel. The pre-trained room prediction model may be stored in the room prediction unit 204 of FIG. 2.

The pre-trained room prediction model is obtained by training the random forest model with a historical room reservation training dataset. The historical room reservation training dataset includes a plurality of historical room records, wherein each historical room record represents a room reservation data associated with a past guest. The past guest is the customer who availed the room in the hotel in the past for stay in the destination city. Each historical room record includes information for at least one of: destination country of the past guest, a destination city of the past guest, a hotel name availed by the past guest, a type of occupancy availed by the past guest in the hotel, date and time of arrival of the past guest, and nationality of the past guest.

The historical room reservation training dataset is pre-processed, to obtain a pre-processed historical room reservation training dataset including a plurality of pre-processed historical room records. Each pre-processed historical room record represents a pre-processed room reservation data associated with the past guest. The pre-processing includes at least one of: cleaning, imputing missing data, and outliers removal. In an embodiment, cleaning process includes making the record in the standard process and removing the metadata available with each record. In an embodiment, the outliers removal process includes removing the record associated with the guest who availed the room in the hotel for short duration (stay). In an embodiment, imputing the missing data including filling the missing data by using data imputing techniques such as statistical methods.

The plurality of pre-processed historical room records is then used to extract a plurality of second features, wherein each second feature is extracted from each pre-processed historical room record. A feature extraction technique such a personalized framework is used to extract the plurality of second features from the plurality of pre-processed historical room records. Each second feature may include the data present in each pre-processed historical room record, in the form of four segments comprising customer, action, entity and context. The segment 'customer' represents the guest who takes the action (represents the segment 'action') on an entity (represents the segment 'entity', based on the context (represents the segment 'context'). For example, guest A (segment 'customer') availed (the segment 'action') a suite room (the segment 'entity') in hotel A (the segment 'entity') having a free kids game zone, as guest A staying with 2 kids (the segment 'context').

Lastly, the random forest model is trained with the plurality of second features, to obtain the pre-trained room prediction model. In each second feature, the data related to 'room' (more particularly, the 'type of occupancy') is passed an output variable and the remaining data as input variables during the training process. The random forest model creates a set of decision trees from the plurality of second features and collects the votes from each decision tree based on the target variable to make the prediction in the form of rooms present in each identified hotel, in the destination city based on the input variables.

The pre-trained room prediction model is validated using a room validation dataset and based on a room confusion matrix, to determine the performance and the training process may be iteratively performed until a predefined accuracy is achieved by the pre-trained room prediction model. The obtained pre-trained room prediction model after the validation is then used to identify the one or more rooms present in each of the one or more hotels in the destination city.

At step 308 of the method 300, the one or more hardware processors 104 of the system 100 are configured to identify one or more ancillary services associated with each vacant room of the one or more vacant rooms identified at step 306 of the method, based on the one or more input parameters received at step 302 of the method 300. A pre-trained ancillary services prediction model is used to identify the one or more ancillary services for each vacant room, based on the specifications and the requirements defined by the guest in the form of the one or more input parameters.

Further, the pre-trained ancillary services prediction model uses some of the input parameters out of the one or more input parameters, to identify and filter the suitable ancillary services that may be available for the identified vacant room by the identified hotel. More specifically, the pre-trained ancillary services prediction model considers the number of adults, the number of children, date and time of arrival, the type of occupancy, the one or more demographic particulars of each adult, the one or more demographic particulars of each child, the nationality of each adult, and the nationality of each child, to predict the one or more ancillary services for each vacant room. Some of the ancillary services include saloon, breakfast, candle-light dinner, spa, games, sports, swimming, and so on. The pre-trained ancillary services prediction model may be stored in the ancillary services prediction unit 206 of FIG. 2.

The pre-trained ancillary services prediction model is obtained by training an XG-boost model with a historical ancillary services reservation training dataset. The historical ancillary services reservation training dataset includes a plurality of historical ancillary services reservation records, wherein each historical ancillary services reservation record represents the ancillary services reservation data associated with the past guest. The past guest is the customer who availed the room along with the ancillary services in the hotel in the past for stay in the destination city. Each historical ancillary services reservation record includes information for at least one of: the destination country of the past guest, the destination city of the past guest, the hotel name availed by the past guest, date and time of arrival of the past guest, date and time of departure of the past guest, nationality of the past guest, type of occupancy availed by the past guest in the hotel, the one or more demographic particulars of the past guest, the nationality of the past guest, and one or more ancillary services availed by the past guest.

The historical ancillary services reservation training dataset is pre-processed, to obtain a pre-processed historical ancillary services reservation training dataset including a plurality of pre-processed historical ancillary services reservation records. Each pre-processed historical ancillary services reservation record represents a pre-processed ancillary services reservation data associated with the past guest. The pre-processing includes at least one of: cleaning, imputing missing data, and outliers removal. In an embodiment, cleaning process includes making the record in the standard process and removing the metadata available with each record. In an embodiment, the outliers removal process includes removing the record associated with the guest who availed the room in the hotel for short duration (stay). In an embodiment, imputing the missing data including filling the missing data by using data imputing techniques such as statistical methods.

The plurality of pre-processed historical ancillary services reservation records is then used to extract a plurality of third features, wherein each third feature is extracted from each pre-processed historical ancillary services reservation record. A feature extraction technique such the personalized framework is used to extract the plurality of third features from the plurality of pre-processed historical ancillary services reservation records. Each third feature may include the data present in each pre-processed historical ancillary services reservation record, in the form of four segments comprising customer, action, entity and context. The segment 'customer' represents the guest who takes the action (represents the segment 'action') on an entity (represents the segment 'entity', based on the context (represents the segment 'context'). For example, guest A (segment 'customer') availed (the segment 'action') a swimming pool service (the segment 'entity') in hotel A (the segment 'entity') for his 2 kids (the segment 'context').

Lastly, the XG-boost model is trained with the plurality of third features, to obtain the pre-trained ancillary services prediction model. In each second feature, the data related to 'ancillary services' is passed as output variables and the remaining data as input variables during the training process. The XG-boost model computes a score for each output variable, based on the set of input variables to make the prediction.

The pre-trained ancillary services prediction model is validated using an ancillary services validation dataset and based on an ancillary services confusion matrix, to determine the performance and the training process may be iteratively performed until a predefined accuracy is achieved by the pre-trained ancillary services prediction model. The obtained pre-trained ancillary services prediction model after the validation is then used to identify the one or more ancillary services associated with each vacant room of the one or more vacant rooms.

At step 310 of the method 300, the one or more hardware processors 104 of the system 100 are configured to form one or more relevant ancillary service bundles, for each vacant room of the one or more vacant rooms, based on the one or more ancillary services identified for each vacant room at step 308 of the method 300. and using a mean average precision (MAP) technique. Each relevant ancillary service bundle includes at least some of the ancillary services out of the one or more ancillary services identified for each vacant room.

In order to form the one or more relevant ancillary service bundles, firstly, a rank is assigned to each of the one or more ancillary services associated with each vacant room obtained at step 308 of the method 300, based on a population score of each of the one or more ancillary services. In an embodiment, the population score of each ancillary service defines how much the popularity (most likely, least likely, recommended, and so on) of the ancillary service that is available for the vacant room in the hotel. The ancillary service having the highest population score is assigned with a higher rank. Similarly, the ancillary service having the lowest population score is assigned with a lower rank. For example, the ancillary service having the highest population score is assigned with the rank '1', the ancillary service having the next highest population score is assigned with the rank '2', and so on, in the sequential order. If two or more ancillary services having the same population score, then, the same rank is assigned to each ancillary service having the same population score.

The population score of each ancillary service is obtained by a pre-trained population score prediction model. In an embodiment, the pre-trained population score prediction model is trained on the ancillary services historical training data and is configured to output; (i) a higher population score for the ancillary service that is most often availed in the past, and (ii) a least population score for the ancillary service that is least likely availed in the past.

Next, a plurality of ancillary service bundles is formed for each vacant room, either randomly or sequentially, based on the one or more ancillary services associated with each vacant room. Further, a Mean Average Precision (MAP) score for each ancillary service bundle of the plurality of ancillary service bundles, for each vacant room, is calculated, using the rank assigned to each of the one or more ancillary services associated with the vacant room. The MAP score for each ancillary service bundle, defines an overall score of the ancillary services present in the corresponding ancillary service bundle.

Next, out of the plurality of ancillary service bundles, one or more ancillary service bundles having the MAP score greater than a predefined threshold, are identified, and formed, for each vacant room. Further, an average precision (AP) score for each vacant room of the one or more vacant rooms, is defined using an average precision technique. In an embodiment, the predefined threshold ranges between 0 and 1, more specifically the predefined threshold may be 0.13. The average precision technique defines a higher precision for the room having superior qualities and a lower precision for the room having low qualities. The average precision (AP) score for each vacant room is then defined based on the precision of the room. In other words, the suite room is generally treated as highest room class type and the AP score for such room class is assigned with highest score, for example, '0.90'. Similarly, the single bedroom is generally treated as low room class type and the AP score for such room class is assigned with lowest score, for example, '0.25'.

Next a morphism score for each of the one or more ancillary service bundles, for each vacant room, is calculated, based on the average precision (AP) score for each vacant room and the MAP score for the corresponding ancillary service bundle associated with the vacant room, using a predefined morphism criterion. The predefined morphism criterion defines a relation between the ancillary service bundle and the vacant room based on the class type, in the form of morphism. The predefined morphism criterion includes:

(i) $f(a, b) = a + b - ab$, is a semigroup with identity between [0,1], where $a$ is the MAP score for the corresponding ancillary service bundle, $b$ is the average precision (AP) score for the corresponding vacant room, and $f(a, b)$ is the morphism score;

(ii) $g(a, b) = (a + b)/2$, is a semigroup with identity between [0,1], where $a$ is the MAP score for the corresponding ancillary service bundle, $b$ is the average precision (AP) score for the corresponding vacant room, and $g(a, b)$ is the morphism score; and

(iii) $h(a, b) = 2ab/(a + b)$, is a semigroup with identity between [0,1], where $a$ is the MAP score for the corresponding ancillary service bundle, $b$ is the average precision (AP) score for the corresponding vacant room, and $h(a, b)$ is the morphism score.

Lastly, one or more relevant ancillary service bundles are determined from the one or more ancillary service bundles, for each vacant room, based on the relevant ancillary service bundle score for each of the one or more ancillary service bundles. For example, the ancillary service bundle having the height morphism score is considered as the relevant ancillary service bundles for the associated vacant room. Table 1 shows exemplary relevant ancillary service bundles for the exemplary vacant room.

Table 1

| Relevant ancillary service bundle number | Relevant ancillary service bundle |
|---|---|
| Bundle 1 | {Breakfast, Dinner, Saloon, SPA} |
| Bundle 2 | {Breakfast, Dinner, Saloon} |
| Bundle 3 | {Breakfast, Dinner, SPA} |
| Bundle 4 | {Breakfast, Dinner} |
| Bundle 5 | {Breakfast, Saloon, SPA} |
| Bundle 6 | {Breakfast, Saloon} |
| Bundle 7 | {Breakfast, SPA} |
| Bundle 8 | {Breakfast} |

At step 312 of the method 300, the one or more hardware processors 104 of the system 100 are configured to determine a fluidic pricing for each of the one or more relevant ancillary service bundles formed at step 310 of the method 300, for each vacant room of the one or more vacant rooms, using a fluidic pricing procedure. The fluidic pricing for each of the one or more relevant ancillary service bundles, defines the best offer price for the associated relevant ancillary service bundle. Further, the guest may make changes in the ancillary services dynamically, and the fluidic pricing for such relevant ancillary service bundle may be changed appropriately based on the interest and requirements of the guest. The fluidic pricing procedure may be stored in the fluidic pricing determining unit 208 of FIG. 2.

The fluidic pricing procedure for determining the fluidic pricing for each of the one or more relevant ancillary service bundles, is explained in the below steps. Firstly, a number of ancillary services present in each of the one or more relevant ancillary service bundles, is calculated for each vacant room of the one or more vacant rooms. For example, the number of ancillary services present in bundle 1 shown in table 1, is '4'. Next, an ancillary services average is calculated based on the number of ancillary services present in each of the one or more relevant ancillary service bundles, for each vacant room. Further, (i) an ancillary services standard deviation and (ii) an ancillary services variance, are determined based on the ancillary services average. A standard statistical standard deviation and variance equations are employed to determine the ancillary services standard deviation and the ancillary services variance, respectively.

Next, (i) an ancillary services covariance (CoV) and (ii) an ancillary services Fano-factor (FF), are calculated based on the ancillary services average, the ancillary services standard deviation, and the ancillary services variance obtained in the previous steps. The ancillary services covariance (CoV) is calculated by dividing the ancillary services standard deviation with the ancillary services average. Similarly, the ancillary services Fano-factor (FF) is calculated by dividing the ancillary services variance with the ancillary services average.

A correlation factor is then calculated based on the ancillary services covariance and the ancillary services Fano-factor, using a correlation equation. The correlation factor defines a correlation among the one or more relevant ancillary service bundles for each vacant room. The correlation equation may be mathematically expressed as in equation 1:

$$Correlation\ factor = \left(\left(\frac{FF}{CoV * CoV}\right) - 1\right)/2 \text{ -------------------------------- (1)}$$

Next, (i) a lower bound, and (ii) an upper bound, are calculated for each of the one or more relevant ancillary service bundles, using the correlation factor and the MAP score associated with each of the one or more relevant ancillary service bundles. In an embodiment, the MAP score associated with each of the one or more relevant ancillary service bundles, is calculated as explained at step 310 of the method 300. The lower bound and the upper bound are calculated for each of the one or more relevant ancillary service bundles, using the lower bound formula and the upper bound formula, as mentioned in equation 2 and 3, respectively:

$$Lower\ bound = MAP\ score - \left(MAP\ score * \frac{CoV\ \%}{100}\right) \text{ ----------- (2)}$$

$$Upper\ bound = MAP\ score + \left(MAP\ score * \frac{CoV\ \%}{100}\right) \text{ ----------- (3)}$$

Next, each of the one or more ancillary service bundles, is classified based on the lower bound and the upper bound associated with the relevant ancillary service bundle, to calculate a deterministic offer for each of the one or more relevant ancillary service bundles. More specifically, the relevant ancillary service bundles having the same or similar lower bound are grouped to one basket (one category). Similarly, the relevant ancillary service bundles having the same or similar upper bound are grouped to another basket (another category), and so on.

The deterministic offer for each of the one or more relevant ancillary service bundles, is calculated based on the classification and a maximum deterministic offer defined for each of the one or more ancillary service bundles. The deterministic offer for each of the one or more relevant ancillary service bundles, represents the standard offer provided by the hotel for the associated relevant ancillary service bundle. The maximum deterministic offer for each of the one or more ancillary service bundles, is defined by the hotel based on possible price offer for each ancillary service present in the relevant ancillary service bundle.

Next, a fluidic offer for each of the one or more relevant ancillary service bundles, is determined based on the deterministic offer calculated for each of the one or more relevant ancillary service bundles. Table 2 shows an exemplary fluidic offer and the exemplary deterministic offer for the exemplary relevant ancillary service bundles shown in table 1.

Table 2

| Relevant ancillary service bundle number | Relevant ancillary service bundle | Fluidic Offer | Deterministic Offer |
|---|---|---|---|
| Bundle 1 | {BF, Dinner, Saloon, SPA} | (20+18+16+14+12)/5 = 16% | 20% |
| Bundle 2 | {BF, Dinner, Saloon} | (20+18+16+14+12+10)/6 = 15% | 18% |
| Bundle 3 | {BF, Dinner, SPA} | (20+18+16+14+12+10)/6 = 15% | 16% |
| Bundle 4 | {BF, Dinner} | (20+18+16+14+12+10+8)/7 = 14% | 14% |
| Bundle 5 | {BF, Saloon, SPA} | (20+18+16+14+12+10+8+6)/8 = 13% | 12% |
| Bundle 6 | {BF, Saloon} | (20+18+16+14+12+10+8+6)/8 = 13% | 10% |
| Bundle 7 | {BF, SPA} | (20+18+16+14+12+10+8+6)/8 = 13% | 8% |
| Bundle 8 | {BF} | (18+16+14+12+10+8+6)/7 = 12% | 6% |

Note from table 2 that, the fluidic offer for each relevant ancillary service bundle is calculated based on the deterministic offer associated with relevant ancillary service bundle and the number of relevant ancillary service bundles present in the associated basket which is made based on the classification as explained in the previous step. If the relevant ancillary service bundle belongs to only one basket, then the fluidic offer for that bundle will be same as the deterministic offer for that basket. If the relevant ancillary service bundle belongs to more than one basket then the fluidic offer for that bundle will be equal to the average of the deterministic offer of all those baskets.

A negotiated offer value for each of the one or more relevant ancillary service bundles, is then calculated based on the deterministic offer and the fluidic offer associated with each of the one or more ancillary service bundles. The negotiated offer value for each of the one or more relevant ancillary service bundles is calculated using equation 4:

$$Negotiated\ offer\ value = (fluidic\ offer + deterministic\ offer)/2 \text{ --- } (3)$$

Table 3 shows an exemplary negotiated offer value for the exemplary relevant ancillary service bundles shown in table 2.

Table 3

| Relevant ancillary service bundle number | Relevant ancillary service bundle | Fluidic Offer | Deterministic Offer | Negotiated offer value |
|---|---|---|---|---|
| Bundle 1 | {BF, Dinner, Saloon, SPA} | 16% | 20% | 18% |
| Bundle 2 | {BF, Dinner, Saloon} | 15% | 18% | 16.5% |
| Bundle 3 | {BF, Dinner, SPA} | 15% | 16% | 15.5 % |
| Bundle 4 | {BF, Dinner} | 14% | 14% | 14% |
| Bundle 5 | {BF, Saloon, SPA} | 13% | 12% | 12.5% |
| Bundle 6 | {BF, Saloon} | 13% | 10% | 11.5% |
| Bundle 7 | {BF, SPA} | 13% | 8% | 10.5% |
| Bundle 8 | {BF} | 12% | 6% | 9% |

A stochastic offer price for each of the one or more ancillary service bundles, is calculated based on the negotiated offer value corresponding to the ancillary service bundle and an actual price value corresponding to the ancillary service bundle and a relevant stochastic ancillary service bundle price for each of the one or more ancillary service bundles, based on the stochastic offer price corresponding to the ancillary service bundle and the actual price value corresponding to the ancillary service bundle. Table 4 shows exemplary stochastic offer price and the relevant stochastic ancillary service bundle price for the exemplary relevant ancillary service bundles shown in table 3.

Table 4

| Relevant ancillary service bundle number | Relevant ancillary service bundle | Negotiated offer value | Actual price | Stochastic offer price | Relevant stochastic ancillary service bundle price |
|---|---|---|---|---|---|
| Bundle 1 | {BF, Dinner, Saloon, SPA} | 18% | 5000 | 900 | 4100 |
| Bundle 2 | {BF, Dinner, Saloon} | 16.50% | 4500 | 743 | 3758 |
| Bundle 3 | {BF, Dinner, SPA} | 15.50% | 4500 | 698 | 3803 |
| Bundle 4 | {BF, Dinner} | 14% | 4000 | 560 | 3440 |
| Bundle 5 | {BF, Saloon, SPA} | 12.50% | 4500 | 563 | 3938 |
| Bundle 6 | {BF, Saloon} | 11.50% | 4000 | 460 | 3540 |
| Bundle 7 | {BF, SPA} | 10.50% | 3000 | 315 | 2685 |
| Bundle 8 | {BF} | 9% | 2500 | 225 | 2275 |

Further, a linear offer for each of the one or more relevant ancillary service bundles, is calculated based on the actual price value corresponding to the relevant ancillary service bundle and the deterministic offer corresponding to the relevant ancillary service bundle, and accordingly, a relevant linear ancillary service bundle price for each of the one or more ancillary service bundles, is calculated based on the actual price value corresponding to the relevant ancillary service bundle and the linear offer corresponding to the relevant ancillary service bundle. Table 5 shows exemplary linear offer and the relevant linear ancillary service bundle price for the exemplary relevant ancillary service bundles shown in table 4.

Table 5

| Relevant ancillary service bundle number | Relevant ancillary service bundle | Deterministic Offer | Actual price | Linear offer | Relevant linear ancillary service bundle price |
|---|---|---|---|---|---|
| Bundle 1 | {BF, Dinner, Saloon, SPA} | 20% | 5000 | 1000 | 4000 |
| Bundle 2 | {BF, Dinner, Saloon} | 18% | 4500 | 810 | 3690 |
| Bundle 3 | {BF, Dinner, SPA} | 16% | 4500 | 720 | 3780 |
| Bundle 4 | {BF, Dinner} | 14% | 4000 | 560 | 3440 |
| Bundle 5 | {BF, Saloon, SPA} | 12% | 4500 | 540 | 3960 |
| Bundle 6 | {BF, Saloon} | 10% | 4000 | 400 | 3600 |
| Bundle 7 | {BF, SPA} | 8% | 3000 | 240 | 2760 |
| Bundle 8 | {BF} | 6% | 2500 | 150 | 2350 |

Lastly, the fluidic pricing for each of the one or more relevant ancillary service bundles, is determined, based on (i) the relevant stochastic ancillary service bundle price for each of the one or more ancillary service bundles, and (ii) the relevant linear ancillary service bundle price for each of the one or more ancillary service bundles.

At step 314 of the method 300, the one or more hardware processors 104 of the system 100 are configured to present the personalized hospitality offerings to the guest, using (i) the one or more hotels identified at step 304 of the method 300, (ii) the one or more vacant rooms identified at step 306 of the method 300, available from the one or more hotels, (iii) the one or more relevant ancillary service bundles formed at step 310 of the method 300 for each vacant room of the one or more vacant rooms, and (iv) the fluidic pricing for each of the one or more relevant ancillary service bundles, determined at step 312 of the method 300, for each vacant room of the one or more vacant rooms. Table 6 shows the exemplary personalized hospitality offerings to the guest, for hotel X and hotel Y and such offering are presented for all the hotels identified at step 304 of the method 300. The guest may choose the room (based on type of occupancy) and the ancillary service bundles among the options, based on the requirement.

Table 6

| Hotel Name | Type of occupancy | Ancillary service bundle | Price |
|---|---|---|---|
| Hotel X | Room A | {BF, Dinner, Saloon, SPA} | 4100 |
| | | {BF, Dinner, Saloon} | 3758 |
| | | {BF, Dinner, SPA} | 3803 |
| | Room B | {BF, Dinner} | 3440 |
| | | {BF, Saloon, SPA} | 3938 |
| Hotel Y | Room A | {BF, Saloon} | 3540 |
| | | {BF, SPA} | 2685 |

The methods and systems of the present disclosure for optimizing personalized hospitality offerings, employs a plurality of prediction models (bucket of prediction models) namely (i) pre-trained hotel prediction model for predicting one or more hotels present in the destination city, based on the input requirements of the customer, (ii) the pre-trained room prediction model for predicting the one or more vacant rooms from the one or more hotels, and (iii) the pre-trained ancillary services prediction model for the predicting the one or more ancillary services available for the one or more vacant rooms. Each prediction model is separately trained on the features obtained from the unstructured historical training data, using a feature extraction technique. The prediction from the bucket of prediction models is a cascaded output and hence is accurate and effective for forming the relevant ancillary service bundles for each vacant room. The fluidic pricing mechanism determines fluidic pricing and offers for multiple relevant ancillary service bundles, which results in multiple products and services, which may suit mostly to the diverse customers. The multiple products and services may be further optimized in different seasons and based on the customization required by the customer. Further, the fluidic pricing and offers may further be customized for type of customer or the guest, such as loyal customer, privileged customer, and so on.

Though the present disclosure is described in detail for optimizing the personalized hospitality offerings, the scope of the present disclosure is not limited to other business segments, such as restaurants, on-line ticket reservations, and so on, with minimal changes in the methods and systems of the present disclosure.

The embodiments of present disclosure herein address unresolved problem of end-to-end technique for optimizing the personalized hospitality offerings. The embodiments herein provide a plurality of prediction models instead of a single prediction model, for predicting the accommodation to the guest based on the requirement. Further, the embodiment herein provides the fluidic pricing mechanism comprising the stochastic pricing offers and the liner pricing offers to give more dynamics to optimize the personalized hospitality offerings.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims (when included in the specification), the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

### Claims

1. A processor-implemented method (300) for optimizing personalized hospitality offerings, the method comprising the steps of:

receiving, via one or more hardware processors (104), one or more input parameters for the personalized hospitality offerings, from a guest, wherein the one or more input parameters comprising: a number of adults, a number of children, a destination country, a destination city, a type of occupancy, date and time of arrival, date and time of departure, one or more demographic particulars of each adult, one or more demographic particulars of each child, nationality of each adult, nationality of each child, a geographic location of each adult, and a geographic location of each child (302);
identifying, via the one or more hardware processors (104), one or more hotels available in the destination city, based on the one or more input parameters, using a pre-trained hotel prediction model (304);
identifying, via the one or more hardware processors (104), one or more vacant rooms available from the one or more hotels, based on the one or more input parameters, using a pre-trained room prediction model (306);
identifying, via the one or more hardware processors (104), one or more ancillary services associated with each vacant room of the one or more vacant rooms, based on the one or more input parameters, using a pre-trained ancillary services prediction model, wherein the one or more ancillary services associated with each vacant room represents the ancillary services available with each vacant room (308);
forming, via the one or more hardware processors (104), one or more relevant ancillary service bundles, for each vacant room of the one or more vacant rooms, based on the one or more ancillary services associated with each vacant room and using a mean average precision, MAP, technique (310), wherein forming the one or more relevant ancillary service bundles, for each vacant room, based on the one or more ancillary services associated with each vacant room and using the MAP technique, comprises:

assigning a rank to each of the one or more ancillary services associated with each vacant room, based on a population score of each of the one or more ancillary services, wherein the population score of each of the one or more ancillary services is obtained by a pre-trained population score prediction model;
forming a plurality of ancillary service bundles, for each vacant room, based on the one or more ancillary services associated with each vacant room;
calculating a MAP score for each ancillary service bundle of the plurality of ancillary service bundles, for each vacant room, using the rank assigned to each of the one or more ancillary services associated with the vacant room; and
forming the one or more ancillary service bundles out of the plurality of ancillary service bundles, having the MAP score for each ancillary service bundle of the plurality of ancillary service bundles greater than a predefined threshold, for each vacant room;

defining an average precision, AP, score, for each vacant room of the one or more vacant rooms, using an average precision technique;

calculating a morphism score for each of the one or more ancillary service bundles, for each vacant room, based on the AP score for each vacant room and the MAP score for the corresponding ancillary service bundle associated with the vacant room, using a predefined morphism criterion; and

determining one or more relevant ancillary service bundles, from the one or more ancillary service bundles, based on the relevant ancillary service bundle score for each of the one or more ancillary service bundles;

determining, via the one or more hardware processors (104), a fluidic pricing for each of the one or more relevant ancillary service bundles, for each vacant room of the one or more vacant rooms, using a fluidic pricing procedure (312), wherein the fluidic pricing for each of the one or more relevant ancillary service bundles dynamically changes based on interest and requirements of the guest; and

presenting, via the one or more hardware processors (104), the personalized hospitality offerings to the guest, using (i) the one or more hotels, (ii) the one or more vacant rooms available from the one or more hotels, (iii) the one or more relevant ancillary service bundles for each vacant room of the one or more vacant rooms, and (iv) the fluidic pricing for each of the one or more relevant ancillary service bundles, for each vacant room of the one or more vacant rooms (314),

wherein each of the pre-trained hotel prediction model, the pre-trained room prediction model, and the pre-trained ancillary services prediction model are separately trained on features obtained from unstructured historical training data using a feature extraction technique.

2. The method of claim 1, wherein the pre-trained hotel prediction model is obtained by:

receiving a historical hotel reservation training dataset comprising a plurality of historical hotel records, wherein each historical hotel record represents a hotel reservation data associated with a past guest and comprising at least one of: a destination country of the past guest, a destination city of the past guest, a hotel name availed by the past guest, date and time of arrival of the past guest, nationality of the past guest, type of occupancy reserved by the past guest;

pre-processing the historical hotel reservation training dataset to obtain a pre-processed historical hotel reservation training dataset comprising a plurality of pre-processed historical hotel records, wherein each pre-processed historical hotel record represents a pre-processed reservation data associated with the past guest, and wherein the pre-processing comprises at least one of: cleaning, imputing missing data, and outliers removal;

extracting a plurality of first features from the plurality of pre-processed historical hotel records, using a feature extraction technique, wherein each first feature is extracted from each pre-processed historical hotel record; and

training a random forest model with the plurality of first features, to obtain the pre-trained hotel prediction model.

3. The method of claim 1, wherein the pre-trained room prediction model is obtained by:

receiving a historical room reservation training dataset comprising a plurality of room historical records, wherein each historical room record represents a room reservation data associated with a past guest and comprising at least one of: a destination country of the past guest, a destination city of the past guest, a hotel name availed by the past guest, a type of occupancy availed by the past guest in the hotel, date and time of arrival of the past guest, and nationality of the past guest;

pre-processing the historical room reservation training dataset to obtain a pre-processed historical room reservation training dataset comprising a plurality of pre-processed historical room records, wherein each pre-processed historical room record represents a pre-processed room reservation data associated with the past guest, and wherein the pre-processing comprises at least one of: cleaning, imputing missing data, and outliers removal;

extracting a plurality of second features from the plurality of pre-processed historical room records, using a feature extraction technique, wherein each second feature is extracted from each pre-processed historical room record; and

training a random forest model with the plurality of second features, to obtain the pre-trained room prediction model.

4. The method of claim 1, wherein the pre-trained ancillary services prediction model is obtained by:

receiving a historical ancillary services reservation training dataset comprising a plurality of historical ancillary services reservation records, wherein each historical ancillary services reservation record represents an ancillary services reservation data associated with a past guest, and comprising at least one of: a destination country of the past guest, a destination city of the past guest, a hotel name availed by the past guest, date and time of arrival of the past guest, date and time of departure of the past guest, nationality of the past guest, type of occupancy availed by the past guest in the hotel, the one or more demographic particulars of the past guest, the nationality of the past guest, and one or more ancillary services availed by the past guest;

pre-processing the historical ancillary services reservation training dataset to obtain a pre-processed historical ancillary services reservation training dataset comprising a plurality of pre-processed historical ancillary services reservation records, wherein each pre-processed historical ancillary services reservation record represents a pre-processed ancillary services reservation data associated with the past guest, and wherein the pre-processing comprises at least one of: cleaning, imputing missing data, and outliers removal;

extracting a plurality of third features from the plurality of pre-processed historical ancillary services reservation records, using a feature extraction technique, wherein each third feature is extracted from each pre-processed historical ancillary services reservation record; and

training an XG-boost model with the plurality of third features, to obtain the pre-trained ancillary services prediction model.

5. The method of claim 1, wherein determining the fluidic pricing for each of the one or more relevant ancillary service bundles, for each vacant room of the one or more vacant rooms, using the fluidic pricing procedure, comprises:

calculating a number of ancillary services present in each of the one or more relevant ancillary service bundles, for each vacant room of the one or more vacant rooms;

calculating an ancillary services average, based on the number of ancillary services present in each of the one or more relevant ancillary service bundles, for each vacant room;

calculating (i) an ancillary services standard deviation and (ii) an ancillary services variance, based on the ancillary services average;

calculating (i) an ancillary services covariance and (ii) an ancillary services Fano-factor, based on the ancillary services average, the ancillary services standard deviation, and the ancillary services variance;

calculating a correlation factor, based on the ancillary services covariance and the ancillary services Fano-factor, using a correlation equation;

calculating (i) a lower bound, and (ii) an upper bound, for each of the one or more relevant ancillary service bundles, using the correlation factor and a MAP score associated with each of the one or more relevant ancillary service bundles;

classifying each of the one or more ancillary service bundles, based on the lower bound, and the upper bound associated with the relevant ancillary service bundle, to calculate a deterministic offer for each of the one or more relevant ancillary service bundles, based on the classification and a maximum deterministic offer defined for each of the one or more ancillary service bundles;

determining a fluidic offer for each of the one or more relevant ancillary service bundles, based on the deterministic offer calculated for each of the one or more relevant ancillary service bundles;

calculating a negotiated offer value for each of the one or more relevant ancillary service bundles, based on the deterministic offer and the fluidic offer associated with each of the one or more ancillary service bundles;

calculating a stochastic offer price for each of the one or more ancillary service bundles, based on the negotiated offer value corresponding to the ancillary service bundle and an actual price value corresponding to the ancillary service bundle;

calculating a relevant stochastic ancillary service bundle price for each of the one or more ancillary service bundles, based on the stochastic offer price corresponding to the ancillary service bundle and the actual price value corresponding to the ancillary service bundle;

calculating a linear offer for each of the one or more relevant ancillary service bundles, based on the actual price value corresponding to the relevant ancillary service bundle and the deterministic offer corresponding to the relevant ancillary service bundle;

calculating a relevant linear ancillary service bundle price for each of the one or more ancillary service bundles, based on the actual price value corresponding to the relevant ancillary service bundle and the linear offer corresponding to the relevant ancillary service bundle; and

determining the fluidic pricing for each of the one or more relevant ancillary service bundles, based on (i) the relevant stochastic ancillary service bundle price for each of the one or more ancillary service bundles, and (ii) the relevant linear ancillary service bundle price for each of the one or more ancillary service bundles.

6. A system (100) for optimizing personalized hospitality offerings, the system (100) comprising:

a memory (102) storing instructions;
one or more Input/Output, I/O, interfaces (106); and
one or more hardware processors (104) coupled to the memory (102) via the one or more I/O interfaces (106), wherein the one or more hardware processors (104) are configured by the instructions to:

receive one or more input parameters for the personalized hospitality offerings, from a guest, wherein the one or more input parameters comprising: a number of adults, a number of children, a destination country, a destination city, a type of occupancy, date and time of arrival, date and time of departure, one or more demographic particulars of each adult, one or more demographic particulars of each child, nationality of each adult, nationality of each child, a geographic location of each adult, and a geographic location of each child; identify one or more hotels available in the destination city, based on the one or more input parameters, using a pre-trained hotel prediction model;
identify one or more vacant rooms available from the one or more hotels, based on the one or more input parameters, using a pre-trained room prediction model;
identify one or more ancillary services associated with each vacant room of the one or more vacant rooms, based on the one or more input parameters, using a pre-trained ancillary services prediction model, wherein the one or more ancillary services associated with each vacant room represents the ancillary services available with each vacant room;
form one or more relevant ancillary service bundles, for each vacant room of the one or more vacant rooms, based on the one or more ancillary services associated with each vacant room and using the mean average precision, MAP, technique, wherein the one or more hardware processors (104) are configured to form the one or more relevant ancillary service bundles, for each vacant room, based on the one or more ancillary services associated with each vacant room and using the MAP technique, by:

assigning a rank to each of the one or more ancillary services associated with each vacant room, based on a population score of each of the one or more ancillary services, wherein the population score of each of the one or more ancillary services is obtained by a pre-trained population score prediction model;
forming a plurality of ancillary service bundles, for each vacant room, based on the one or more ancillary services associated with each vacant room;
calculating a MAP score for each ancillary service bundle of the plurality of ancillary service bundles, for each vacant room, using the rank assigned to each of the one or more ancillary services associated with the vacant room; and
forming the one or more ancillary service bundles out of the plurality of ancillary service bundles, having the MAP score for each ancillary service bundle of the plurality of ancillary service bundles greater than a predefined threshold, for each vacant room;
defining an average precision (AP) score, for each vacant room of the one or more vacant rooms, using an average precision technique;
calculating a morphism score for each of the one or more ancillary service bundles, for each vacant room, based on the average precision (AP) score for each vacant room and the MAP score for the corresponding ancillary service bundle associated with the vacant room, using a predefined morphism criterion; and
determining one or more relevant ancillary service bundles, from the one or more ancillary service bundles, based on the relevant ancillary service bundle score for each of the one or more ancillary service bundles;

determine a fluidic pricing for each of the one or more relevant ancillary service bundles, for each vacant room of the one or more vacant rooms, using a fluidic pricing procedure, wherein the fluidic pricing for each of the one or more relevant ancillary service bundles dynamically changes based on interest and requirements of the guest; and
present the personalized hospitality offerings to the guest, using (i) the one or more hotels, (ii) the one or more vacant rooms available from the one or more hotels, (iii) the one or more relevant ancillary service bundles for each vacant room of the one or more vacant rooms, and (iv) the fluidic pricing for each of the one or more relevant ancillary service bundles, for each vacant room of the one or more vacant rooms, wherein each of the pre-trained hotel prediction model, the pre-trained room prediction model, and the pre-trained ancillary services prediction model are separately trained on features obtained from unstructured historical training data using a feature extraction technique.

7. The system of claim 6, wherein the one or more hardware processors (104) are configured to obtain the pre-trained hotel prediction model, by:

receiving a historical hotel reservation training dataset comprising a plurality of hotel historical records, wherein each hotel historical record represents a hotel reservation data associated with a past guest and comprising at least one of: a destination country of the past guest, a destination city of the past guest, a hotel name availed by the past guest, date and time of arrival of the past guest, nationality of the past guest, type of occupancy reserved by the past guest;

pre-processing the historical hotel reservation training dataset to obtain a pre-processed historical hotel reservation training dataset comprising a plurality of pre-processed hotel historical records, wherein each pre-processed hotel historical record represents a pre-processed reservation data associated with the past guest, and wherein the pre-processing comprises at least one of: cleaning, imputing missing data, and outliers removal;

extracting a plurality of first features from the plurality of pre-processed hotel historical records, using a feature extraction technique, wherein each first feature is extracted from each pre-processed hotel historical record; and

training a random forest model with the plurality of first features, to obtain the pre-trained hotel prediction model.

8. The system of claim 6, wherein the one or more hardware processors (104) are configured to obtain the pre-trained room prediction model, by:

receiving a historical room reservation training dataset comprising a plurality of room historical records, wherein each room historical record represents a room reservation data associated with a past guest and comprising at least one of: a destination country of the past guest, a destination city of the past guest, a hotel name availed by the past guest, a type of occupancy availed by the past guest in the hotel, date and time of arrival of the past guest, and nationality of the past guest;

pre-processing the historical room reservation training dataset to obtain a pre-processed historical room reservation training dataset comprising a plurality of pre-processed room historical records, wherein each pre-processed room historical record represents a pre-processed room reservation data associated with the past guest, and wherein the pre-processing comprises at least one of: cleaning, imputing missing data, and outliers removal;

extracting a plurality of second features from the plurality of pre-processed room historical records, using a feature extraction technique, wherein each second feature is extracted from each pre-processed room historical record; and

training a random forest model with the plurality of second features, to obtain the pre-trained room prediction model.

9. The system of claim 6, wherein the one or more hardware processors (104) are configured to obtain the pre-trained ancillary services prediction model, by:

receiving a historical ancillary services reservation training dataset comprising a plurality of historical ancillary services reservation records, wherein each historical ancillary services reservation records represents an ancillary services reservation data associated with a past guest, and comprising at least one of: a destination country of the past guest, a destination city of the past guest, a hotel name availed by the past guest, date and time of arrival of the past guest, date and time of departure of the past guest, nationality of the past guest, type of occupancy availed by the past guest in the hotel, and one or more ancillary services availed by the past guest;

pre-processing the historical ancillary services reservation training dataset to obtain a pre-processed historical ancillary services reservation training dataset comprising a plurality of pre-processed historical ancillary services reservation records, wherein each pre-processed historical ancillary services reservation record represents a pre-processed ancillary services reservation data associated with the past guest, and wherein the pre-processing comprises at least one of: cleaning, imputing missing data, and outliers removal;

extracting a plurality of third features from the plurality of pre-processed historical ancillary services reservation records, using a feature extraction technique, wherein each third feature is extracted from each pre-processed historical ancillary services reservation record; and

training an XG-boost model with the plurality of third features, to obtain the pre-trained ancillary service prediction model.

10. The system of claim 6, wherein the one or more hardware processors (104) are configured to determine the fluidic pricing for each of the one or more relevant ancillary service bundles, for each vacant room of the one or more vacant rooms, using the fluidic pricing procedure, by:

calculating a number of ancillary services present in each of the one or more relevant ancillary service bundles, for each vacant room of the one or more vacant rooms;

calculating an ancillary services average, based on the number of ancillary services present in each of the one or more relevant ancillary service bundles, for each vacant room;

calculating (i) an ancillary services standard deviation and (ii) an ancillary services variance, based on the ancillary services average;

calculating (i) an ancillary services covariance and (ii) an ancillary services Fano-factor, based on the ancillary services average, the ancillary services standard deviation, and the ancillary services variance;

calculating a correlation factor, based on the ancillary services covariance and the ancillary services Fano-factor, using a correlation equation;

calculating (i) a lower bound, and (ii) an upper bound, for each of the one or more relevant ancillary service bundles, using the correlation factor and a MAP score associated with each of the one or more relevant ancillary service bundles;

classifying each of the one or more ancillary service bundles, based on the lower bound, and the upper bound associated ancillary service bundle, to calculate a deterministic offer for each of the one or more relevant ancillary service bundles, based on the classification and a maximum deterministic offer defined for each of the one or more ancillary service bundles;

determining a fluidic offer for each of the one or more relevant ancillary service bundles, based on the deterministic offer calculated for each of the one or more relevant ancillary service bundles;

calculating a negotiated offer value for each of the one or more relevant ancillary service bundles, based on the deterministic offer and the fluidic offer associated with each of the one or more ancillary service bundles;

calculating a stochastic offer price for each of the one or more ancillary service bundles, based on the negotiated offer value corresponding to the ancillary service bundle and an actual price value corresponding to the ancillary service bundle;

calculating a relevant stochastic ancillary service bundle price for each of the one or more ancillary service bundles, based on the stochastic offer price corresponding to the ancillary service bundle and the actual price value corresponding to the ancillary service bundle;

calculating a linear offer for each of the one or more relevant ancillary service bundles, based on the actual price value corresponding to the relevant ancillary service bundle and the deterministic offer corresponding to the relevant ancillary service bundle;

calculating a relevant linear ancillary service bundle price for each of the one or more ancillary service bundles, based on the actual price value corresponding to the relevant ancillary service bundle and the linear offer corresponding to the relevant ancillary service bundle; and

determining the fluidic pricing for each of the one or more relevant ancillary service bundles, based on (i) the relevant stochastic ancillary service bundle price for each of the one or more ancillary service bundles, and (ii) the relevant linear ancillary service bundle price for each of the one or more ancillary service bundles.

11. One or more non-transitory machine-readable information storage mediums comprising one or more instructions which when executed by one or more hardware processors (104) cause:

receiving, one or more input parameters for the personalized hospitality offerings, from a guest, wherein the one or more input parameters comprising: a number of adults, a number of children, a destination country, a destination city, a type of occupancy, date and time of arrival, date and time of departure, one or more demographic particulars of each adult, one or more demographic particulars of each child, nationality of each adult, nationality of each child, a geographic location of each adult, and a geographic location of each child;

identifying, one or more hotels available in the destination city, based on the one or more input parameters, using a pre-trained hotel prediction model;

identifying, one or more vacant rooms available from the one or more hotels, based on the one or more input parameters, using a pre-trained room prediction model;

identifying, one or more ancillary services associated with each vacant room of the one or more vacant rooms, based on the one or more input parameters, using a pre-trained ancillary services prediction model, wherein the one or more ancillary services associated with each vacant room represents the ancillary services available with each vacant room;

forming, one or more relevant ancillary service bundles, for each vacant room of the one or more vacant rooms, based on the one or more ancillary services associated with each vacant room and using a mean average precision (MAP) technique, wherein forming the one or more relevant ancillary service bundles, for each vacant room, based on the one or more ancillary services associated with each vacant room and using the MAP technique, comprises:

assigning a rank to each of the one or more ancillary services associated with each vacant room, based on a population score of each of the one or more ancillary services, wherein the population score of each of the one or more ancillary services is obtained by a pre-trained population score prediction model;

forming a plurality of ancillary service bundles, for each vacant room, based on the one or more ancillary services associated with each vacant room;

calculating a MAP score for each ancillary service bundle of the plurality of ancillary service bundles, for each vacant room, using the rank assigned to each of the one or more ancillary services associated with the vacant room; and

forming the one or more ancillary service bundles out of the plurality of ancillary service bundles, having the MAP score for each ancillary service bundle of the plurality of ancillary service bundles greater than a predefined threshold, for each vacant room;

defining an average precision, AP, score, for each vacant room of the one or more vacant rooms, using an average precision technique;

calculating a morphism score for each of the one or more ancillary service bundles, for each vacant room, based on the AP score for each vacant room and the MAP score for the corresponding ancillary service bundle associated with the vacant room, using a predefined morphism criterion; and

determining one or more relevant ancillary service bundles, from the one or more ancillary service bundles, based on the relevant ancillary service bundle score for each of the one or more ancillary service bundles;

determining, a fluidic pricing for each of the one or more relevant ancillary service bundles, for each vacant room of the one or more vacant rooms, using a fluidic pricing procedure, wherein the fluidic pricing for each of the one or more relevant ancillary service bundles dynamically changes based on interest and requirements of the guest; and

presenting, the personalized hospitality offerings to the guest, using (i) the one or more hotels, (ii) the one or more vacant rooms available from the one or more hotels, (iii) the one or more relevant ancillary service bundles for each vacant room of the one or more vacant rooms, and (iv) the fluidic pricing for each of the one or more relevant ancillary service bundles, for each vacant room of the one or more vacant rooms,

wherein each of the pre-trained hotel prediction model, the pre-trained room prediction model, and the pre-trained ancillary services prediction model are separately trained on features obtained from unstructured historical training data using a feature extraction technique.

## Patentansprüche

1. Prozessorimplementiertes Verfahren (300) zum Optimieren personalisierter Gastfreundschaftsangebote, wobei das Verfahren die folgenden Schritte umfasst:

Empfangen, über einen oder mehrere Hardwareprozessoren (104), eines oder mehrerer Eingabeparameter für die personalisierten Gastfreundschaftsangebote von einem Gast, wobei der eine oder die mehreren Eingabeparameter Folgendes umfassen: eine Anzahl von Erwachsenen, eine Anzahl von Kindern, ein Zielland, eine Zielstadt, einen Belegungstyp, ein Datum und eine Ankunftszeit, ein Datum und eine Abreisezeit, eine oder mehrere demografische Angaben jedes Erwachsenen, eine oder mehrere demografische Angaben jedes Kindes, eine Staatsangehörigkeit jedes Erwachsenen, eine Staatsangehörigkeit jedes Kindes, einen geografischen Standort jedes Erwachsenen und einen geografischen Standort jedes Kindes (302);

Identifizieren, über den einen oder die mehreren Hardwareprozessoren (104), eines oder mehrerer Hotels, die in der Zielstadt verfügbar sind, basierend auf dem einen oder den mehreren Eingabeparametern unter Verwendung eines vorgeschulten Hotelvorhersagemodells (304);

Identifizieren, über den einen oder die mehreren Hardwareprozessoren (104), eines oder mehrerer freier Räume, die von dem einen oder den mehreren Hotels verfügbar sind, basierend auf dem einen oder den mehreren Eingabeparametern unter Verwendung eines vorgeschulten Raumvorhersagemodells (306);

Identifizieren, über den einen oder die mehreren Hardwareprozessoren (104), eines oder mehrerer Zusatzdienste, die mit jedem freien Raum des einen oder der mehreren freien Räume assoziiert sind, basierend auf dem einen oder den mehreren Eingabeparametern unter Verwendung eines vorgeschulten Zusatzdienstvorhersagemodells, wobei der eine oder die mehreren Zusatzdienste, die mit jedem freien Raum assoziiert sind, die Zusatzdienste darstellen, die mit jedem freien Raum verfügbar sind (308);

Bilden, über den einen oder die mehreren Hardwareprozessoren (104), eines oder mehrerer relevanter Zusatzdienstbündel für jeden freien Raum des einen oder der mehreren freien Räume basierend auf dem einen oder den mehreren Zusatzdiensten, die mit jedem freien Raum assoziiert sind, und unter Verwendung einer Technik der mittleren Durchschnittsgenauigkeit (Mean Average Precision), MAP, (310), wobei das Bilden des einen oder der mehreren relevanten Zusatzdienstbündel für jeden freien Raum basierend auf dem einen oder den mehreren Zusatzdiensten, die mit jedem freien Raum assoziiert sind, und unter Verwendung der MAP-Technik Folgendes umfasst:

Zuweisen eines Rangs zu jedem des einen oder der mehreren Zusatzdienste, die mit jedem freien Raum assoziiert sind, basierend auf einer Bevölkerungsbewertung jedes des einen oder der mehreren Zusatzdienste, wobei die Bevölkerungsbewertung jedes des einen oder der mehreren Zusatzdienste durch ein vorgeschultes Bevölkerungsbewertungsvorhersagemodell erhalten wird;

Bilden einer Mehrzahl von Zusatzdienstbündeln für jeden freien Raum basierend auf dem einen oder den mehreren Zusatzdiensten, die mit jedem freien Raum assoziiert sind;

Berechnen einer MAP-Bewertung für jedes Zusatzdienstbündel der Mehrzahl von Zusatzdienstbündeln für jeden freien Raum unter Verwendung des Rangs, der jedem des einen oder der mehreren Zusatzdienste zugewiesen ist, die mit dem freien Raum assoziiert sind; und

Bilden des einen oder der mehreren Zusatzdienstbündel aus der Mehrzahl von Zusatzdienstbündeln, wobei die MAP-Bewertung für jedes Zusatzdienstbündel der Mehrzahl von Zusatzdienstbündeln größer als ein vordefinierter Schwellenwert ist, für jeden freien Raum;

Definieren einer Bewertung der mittleren Genauigkeit (Average Precision), AP, für jeden freien Raum des einen oder der mehreren freien Räume unter Verwendung einer Technik der mittleren Genauigkeit;

Berechnen einer Morphismusbewertung für jedes des einen oder der mehreren Zusatzdienstbündel für jeden freien Raum basierend auf der AP-Bewertung für jeden freien Raum und der MAP-Bewertung für das entsprechende Zusatzdienstbündel, das mit dem freien Raum assoziiert ist, unter Verwendung eines vordefinierten Morphismuskriteriums; und

Bestimmen eines oder mehrerer relevanter Zusatzdienstbündel aus dem einen oder den mehreren Zusatzdienstbündeln basierend auf der Bewertung des relevanten Zusatzdienstbündels für jedes des einen oder der mehreren Zusatzdienstbündel;

Bestimmen, über den einen oder die mehreren Hardwareprozessoren (104), einer Fluidpreisgestaltung für jedes des einen oder der mehreren relevanten Zusatzdienstbündel für jeden freien Raum des einen oder der mehreren freien Räume unter Verwendung einer Fluidpreisgestaltungsprozedur (312), wobei sich die Fluidpreisgestaltung für jedes des einen oder der mehreren relevanten Zusatzdienstbündel basierend auf Interesse und Anforderungen des Gastes dynamisch ändert; und

Präsentieren, über den einen oder die mehreren Hardwareprozessoren (104), der personalisierten Gastfreundschaftsangebote für den Gast unter Verwendung (i) des einen oder der mehreren Hotels, (ii) des einen oder der mehreren freien Räume, die von dem einen oder den mehreren Hotels verfügbar sind, (iii) des einen oder der mehreren relevanten Zusatzdienstbündel für jeden freien Raum des einen oder der mehreren freien Räume und (iv) der Fluidpreisgestaltung für jedes des einen oder der mehreren relevanten Zusatzdienstbündel für jeden freien Raum des einen oder der mehreren freien Räume (314),

wobei jedes des vortrainierten Hotelvorhersagemodells, des vortrainierten Raumvorhersagemodells und des vortrainierten Zusatzdienstvorhersagemodells separat auf Merkmale trainiert wird, die aus unstrukturierten historischen Trainingsdaten unter Verwendung einer Merkmalsextraktionstechnik erhalten werden.

2. Verfahren nach Anspruch 1, wobei das vortrainierte Hotelvorhersagemodell erhalten wird durch:

Empfangen eines historischen Hotelreservierungstrainingsdatensatzes, der eine Mehrzahl historischer Hotelaufzeichnungen umfasst, wobei jede historische Hotelaufzeichnung Hotelreservierungsdaten darstellt, die einem vergangenen Gast zugeordnet sind, und mindestens eines der Folgenden umfasst: ein Zielland des vergangenen Gastes, eine Zielstadt des vergangenen Gastes, einen von dem vergangenen Gast verfügbaren Hotelnamen, Datum und Ankunftszeit des vergangenen Gastes, Staatsangehörigkeit des vergangenen Gastes, Art der von dem vergangenen Gast reservierten Belegung;

Vorverarbeiten des historischen Hotelreservierungstrainingsdatensatzes, um einen vorverarbeiteten historischen Hotelreservierungstrainingsdatensatz zu erhalten, der eine Mehrzahl vorverarbeiteter historischer Hotelaufzeichnungen umfasst, wobei jede vorverarbeitete historische Hotelaufzeichnung vorverarbeitete Reservierungsdaten darstellt, die dem vergangenen Gast zugeordnet sind, und wobei das Vorverarbeiten mindestens eines der Folgenden umfasst: Bereinigen, Imputieren fehlender Daten und Entfernen von Ausreißern;

Extrahieren einer Mehrzahl erster Merkmale aus der Mehrzahl vorverarbeiteter historischer Hotelaufzeichnungen unter Verwendung einer Merkmalsextraktionstechnik, wobei jedes erste Merkmal aus jeder vorverarbeiteten historischen Hotelaufzeichnung extrahiert wird; und

Trainieren eines Zufallswaldmodells mit der Mehrzahl erster Merkmale, um das vortrainierte Hotelvorhersagemodell zu erhalten.

3. Verfahren nach Anspruch 1, wobei das vortrainierte Raumvorhersagemodell erhalten wird durch:

Empfangen eines historischen Raumreservierungstrainingsdatensatzes, der eine Mehrzahl historischer Raumaufzeichnungen umfasst, wobei jede historische Raumaufzeichnung Raumreservierungsdaten darstellt, die einem vergangenen Gast zugeordnet sind, und mindestens eines der Folgenden umfasst: ein Zielland des vergangenen Gastes, eine Zielstadt des vergangenen Gastes, einen von dem vergangenen Gast verfügbaren Hotelnamen, eine Art der von dem vergangenen Gast in dem Hotel verfügbaren Belegung, Datum und Ankunftszeit des vergangenen Gastes und Staatsangehörigkeit des vergangenen Gastes;
Vorverarbeiten des historischen Raumreservierungstrainingsdatensatzes, um einen vorverarbeiteten historischen Raumreservierungstrainingsdatensatz zu erhalten, der eine Mehrzahl vorverarbeiteter historischer Raumaufzeichnungen umfasst, wobei jede vorverarbeitete historische Raumaufzeichnung vorverarbeitete Raumreservierungsdaten darstellt, die dem vergangenen Gast zugeordnet sind, und wobei das Vorverarbeiten mindestens eines der Folgenden umfasst: Bereinigen, Imputieren fehlender Daten und Entfernen von Ausreißern;
Extrahieren einer Mehrzahl zweiter Merkmale aus der Mehrzahl vorverarbeiteter historischer Raumaufzeichnungen unter Verwendung einer Merkmalsextraktionstechnik, wobei jedes zweite Merkmal aus jeder vorverarbeiteten historischen Raumaufzeichnung extrahiert wird; und
Trainieren eines Zufallswaldmodells mit der Mehrzahl zweiter Merkmale, um das vortrainierte Raumvorhersagemodell zu erhalten.

4. Verfahren nach Anspruch 1, wobei das vortrainierte Nebendienstvorhersagemodell erhalten wird durch:

Empfangen eines historischen Nebendienstreservierungstrainingsdatensatzes, der eine Mehrzahl historischer Nebendienstreservierungsaufzeichnungen umfasst, wobei jede historische Nebendienstreservierungsaufzeichnung Nebendienstreservierungsdaten darstellt, die einem vergangenen Gast zugeordnet sind, und mindestens eines der Folgenden umfasst: ein Zielland des vergangenen Gastes, eine Zielstadt des vergangenen Gastes, einen von dem vergangenen Gast verfügbaren Hotelnamen, Datum und Ankunftszeit des vergangenen Gastes, Datum und Abreisezeit des vergangenen Gastes, Staatsangehörigkeit des vergangenen Gastes, Art der von dem vergangenen Gast in dem Hotel verfügbaren Belegung, die eine oder die mehreren demografischen Angaben des vergangenen Gastes, die Staatsangehörigkeit des vergangenen Gastes und einen oder mehrere von dem vergangenen Gast verfügbare Nebendienste;
Vorverarbeiten des historischen Nebendienstreservierungstrainingsdatensatzes, um einen vorverarbeiteten historischen Nebendienstreservierungstrainingsdatensatz zu erhalten, der eine Mehrzahl vorverarbeiteter historischer Nebendienstreservierungsaufzeichnungen umfasst, wobei jede vorverarbeitete historische Nebendienstreservierungsaufzeichnung vorverarbeitete Nebendienstreservierungsdaten darstellt, die dem vergangenen Gast zugeordnet sind, und wobei das Vorverarbeiten mindestens eines der Folgenden umfasst: Bereinigen, Imputieren fehlender Daten und Entfernen von Ausreißern;
Extrahieren einer Mehrzahl dritter Merkmale aus der Mehrzahl vorverarbeiteter historischer Nebendienstreservierungsaufzeichnungen unter Verwendung einer Merkmalsextraktionstechnik, wobei jedes dritte Merkmal aus jeder vorverarbeiteten historischen Nebendienstreservierungsaufzeichnung extrahiert wird; und
Trainieren eines XG-Boost-Modells mit der Mehrzahl dritter Merkmale, um das vortrainierte Nebendienstvorhersagemodell zu erhalten.

5. Verfahren nach Anspruch 1, wobei das Bestimmen der Fluidpreisgestaltung für jedes des einen oder der mehreren relevanten Zusatzdienstbündel für jeden freien Raum des einen oder der mehreren freien Räume unter Verwendung der Fluidpreisgestaltungsprozedur Folgendes umfasst:

Berechnen einer Anzahl von Nebendiensten, die in jedem des einen oder der mehreren relevanten Zusatzdienstbündel vorhanden sind, für jeden freien Raum des einen oder der mehreren freien Räume;
Berechnen eines Nebendienstdurchschnitts basierend auf der Anzahl von Nebendiensten, die in jedem des einen oder der mehreren relevanten Zusatzdienstbündel vorhanden sind, für jeden freien Raum;
Berechnen (i) einer Nebendienststandardabweichung und (ii) einer Nebendienstvarianz basierend auf dem Nebendienstdurchschnitt;
Berechnen (i) einer Nebendienstkovarianz und (ii) eines Nebendienstfano-Faktors basierend auf dem Nebendienstdurchschnitt, der Nebendienststandardabweichung und der Nebendienstvarianz;

Berechnen eines Korrelationsfaktors basierend auf der Nebendienstkovarianz und dem Nebendienstfano-Faktor unter Verwendung einer Korrelationsgleichung;

Berechnen (i) einer unteren Grenze und (ii) einer oberen Grenze für jedes des einen oder der mehreren relevanten Zusatzdienstbündel unter Verwendung des Korrelationsfaktors und einer MAP-Bewertung, die mit jedem des einen oder der mehreren relevanten Zusatzdienstbündel assoziiert ist;

Klassifizieren jedes des einen oder der mehreren Zusatzdienstbündel basierend auf der unteren Grenze und der oberen Grenze, die mit dem relevanten Zusatzdienstbündel assoziiert ist, um ein deterministisches Angebot für jedes des einen oder der mehreren relevanten Zusatzdienstbündel basierend auf der Klassifizierung und einem maximalen deterministischen Angebot zu berechnen, das für jedes des einen oder der mehreren Zusatzdienstbündel definiert ist;

Bestimmen eines fluidischen Angebots für jedes des einen oder der mehreren relevanten Zusatzdienstbündel basierend auf dem deterministischen Angebot, das für jedes des einen oder der mehreren relevanten Zusatzdienstbündel berechnet wird;

Berechnen eines ausgehandelten Angebotswerts für jedes des einen oder der mehreren relevanten Zusatzdienstbündel basierend auf dem deterministischen Angebot und dem fluidischen Angebot, das mit jedem des einen oder der mehreren Zusatzdienstbündel assoziiert ist;

Berechnen eines stochastischen Angebotspreises für jedes des einen oder der mehreren Zusatzdienstbündel basierend auf dem ausgehandelten Angebotswert, der dem Zusatzdienstbündel entspricht, und einem tatsächlichen Preiswert, der dem Zusatzdienstbündel entspricht;

Berechnen eines relevanten stochastischen Zusatzdienstbündelpreises für jedes des einen oder der mehreren Zusatzdienstbündel basierend auf dem stochastischen Angebotspreis, der dem Zusatzdienstbündel entspricht, und dem tatsächlichen Preiswert, der dem Zusatzdienstbündel entspricht;

Berechnen eines linearen Angebots für jedes des einen oder der mehreren relevanten Zusatzdienstbündel basierend auf dem tatsächlichen Preiswert, der dem relevanten Zusatzdienstbündel entspricht, und dem deterministischen Angebot, das dem relevanten Zusatzdienstbündel entspricht;

Berechnen eines relevanten linearen Zusatzdienstbündelpreises für jedes des einen oder der mehreren Zusatzdienstbündel basierend auf dem tatsächlichen Preiswert, der dem relevanten Zusatzdienstbündel entspricht, und dem linearen Angebot, das dem relevanten Zusatzdienstbündel entspricht; und

Bestimmen der fluidischen Preisgestaltung für jedes des einen oder der mehreren relevanten Zusatzdienstbündel basierend auf (i) dem relevanten stochastischen Zusatzdienstbündelpreis für jedes des einen oder der mehreren Zusatzdienstbündel und (ii) dem relevanten linearen Zusatzdienstbündelpreis für jedes des einen oder der mehreren Zusatzdienstbündel.

6. System (100) zum Optimieren personalisierter Gastfreundschaftsangebote, wobei das System (100) Folgendes umfasst:

einen Speicher (102), der Anweisungen speichert;
eine oder mehrere Eingabe/Ausgabe-, E/A-, Schnittstellen (106); und
einen oder mehrere Hardwareprozessoren (104), die über die eine oder die mehreren E/A-Schnittstellen (106) mit dem Speicher (102) gekoppelt sind, wobei der eine oder die mehreren Hardwareprozessoren (104) durch die Anweisungen konfiguriert sind zum:

Empfangen eines oder mehrerer Eingabeparameter für die personalisierten Gastfreundschaftsangebote von einem Gast, wobei der eine oder die mehreren Eingabeparameter Folgendes umfassen: eine Anzahl von Erwachsenen, eine Anzahl von Kindern, ein Zielland, eine Zielstadt, einen Belegungstyp, ein Datum und eine Ankunftszeit, ein Datum und eine Abreisezeit, eine oder mehrere demografische Angaben jedes Erwachsenen, eine oder mehrere demografische Angaben jedes Kindes, eine Staatsangehörigkeit jedes Erwachsenen, eine Staatsangehörigkeit jedes Kindes, einen geografischen Standort jedes Erwachsenen und einen geografischen Standort jedes Kindes;

Identifizieren eines oder mehrerer Hotels, die in der Zielstadt verfügbar sind, basierend auf dem einen oder den mehreren Eingabeparametern unter Verwendung eines vorgeschulten Hotelvorhersagemodells;

Identifizieren eines oder mehrerer freier Räume, die von dem einen oder den mehreren Hotels verfügbar sind, basierend auf dem einen oder den mehreren Eingabeparametern unter Verwendung eines vorgeschulten Raumvorhersagemodells;

Identifizieren eines oder mehrerer Zusatzdienste, die mit jedem freien Raum des einen oder der mehreren freien Räume assoziiert sind, basierend auf dem einen oder den mehreren Eingabeparametern unter Verwendung eines vorgeschulten Zusatzdienstvorhersagemodells, wobei der eine oder die mehreren Zusatzdienste, die mit jedem freien Raum assoziiert sind, die Zusatzdienste darstellen, die mit jedem freien Raum verfügbar sind;

Bilden eines oder mehrerer relevanter Zusatzdienstbündel für jeden freien Raum des einen oder der mehreren freien Räume basierend auf dem einen oder den mehreren Zusatzdiensten, die mit jedem freien Raum assoziiert sind, und unter Verwendung der Technik der mittleren Durchschnittsgenauigkeit (Mean Average Precision), MAP, wobei der eine oder die mehreren Hardwareprozessoren (104) konfiguriert sind zum Bilden des einen oder der mehreren relevanten Zusatzdienstbündel für jeden freien Raum basierend auf dem einen oder den mehreren Zusatzdiensten, die mit jedem freien Raum assoziiert sind, und unter Verwendung der MAP-Technik durch:

Zuweisen eines Rangs zu jedem des einen oder der mehreren Zusatzdienste, die mit jedem freien Raum assoziiert sind, basierend auf einer Bevölkerungsbewertung jedes des einen oder der mehreren Zusatzdienste, wobei die Bevölkerungsbewertung jedes des einen oder der mehreren Zusatzdienste durch ein vorgeschultes Bevölkerungsbewertungsvorhersagemodell erhalten wird;

Bilden einer Mehrzahl von Zusatzdienstbündeln für jeden freien Raum basierend auf dem einen oder den mehreren Zusatzdiensten, die mit jedem freien Raum assoziiert sind;

Berechnen einer MAP-Bewertung für jedes Zusatzdienstbündel der Mehrzahl von Zusatzdienstbündeln für jeden freien Raum unter Verwendung des Rangs, der jedem des einen oder der mehreren Zusatzdienste zugewiesen ist, die mit dem freien Raum assoziiert sind; und

Bilden des einen oder der mehreren Zusatzdienstbündel aus der Mehrzahl von Zusatzdienstbündeln, wobei die MAP-Bewertung für jedes Zusatzdienstbündel der Mehrzahl von Zusatzdienstbündeln größer als ein vordefinierter Schwellenwert ist, für jeden freien Raum;

Definieren einer Bewertung der mittleren Genauigkeit (Average Precision, AP) für jeden freien Raum des einen oder der mehreren freien Räume unter Verwendung einer Technik der mittleren Genauigkeit;

Berechnen einer Morphismusbewertung für jedes des einen oder der mehreren Zusatzdienstbündel für jeden freien Raum basierend auf der Bewertung der mittleren Genauigkeit (Average Precision. AP) für jeden freien Raum und der MAP-Bewertung für das entsprechende Zusatzdienstbündel, das mit dem freien Raum assoziiert ist, unter Verwendung eines vordefinierten Morphismuskriteriums; und

Bestimmen eines oder mehrerer relevanter Zusatzdienstbündel aus dem einen oder den mehreren Zusatzdienstbündeln basierend auf der Bewertung des relevanten Zusatzdienstbündels für jedes des einen oder der mehreren Zusatzdienstbündel;

Bestimmen einer Fluidpreisgestaltung für jedes des einen oder der mehreren relevanten Zusatzdienstbündel für jeden freien Raum des einen oder der mehreren freien Räume unter Verwendung einer Fluidpreisgestaltungsprozedur, wobei sich die Fluidpreisgestaltung für jedes des einen oder der mehreren relevanten Zusatzdienstbündel basierend auf Interesse und Anforderungen des Gastes dynamisch ändert; und

Präsentieren der personalisierten Gastfreundschaftsangebote für den Gast unter Verwendung (i) des einen oder der mehreren Hotels, (ii) des einen oder der mehreren freien Räume, die von dem einen oder den mehreren Hotels verfügbar sind, (iii) des einen oder der mehreren relevanten Zusatzdienstbündel für jeden freien Raum des einen oder der mehreren freien Räume und (iv) der Fluidpreisgestaltung für jedes des einen oder der mehreren relevanten Zusatzdienstbündel für jeden freien Raum des einen oder der mehreren freien Räume,

wobei jedes des vortrainierten Hotelvorhersagemodells, des vortrainierten Raumvorhersagemodells und des vortrainierten Zusatzdienstvorhersagemodells separat auf Merkmale trainiert wird, die aus unstrukturierten historischen Trainingsdaten unter Verwendung einer Merkmalsextraktionstechnik erhalten werden.

7. System nach Anspruch 6, wobei der eine oder die mehreren Hardwareprozessoren (104) konfiguriert sind, um das vortrainierte Hotelvorhersagemodell zu erhalten durch:

Empfangen eines historischen Hotelreservierungstrainingsdatensatzes, der eine Mehrzahl historischer Hotelaufzeichnungen umfasst, wobei jede historische Hotelaufzeichnung Hotelreservierungsdaten darstellt, die einem vergangenen Gast zugeordnet sind, und mindestens eines der Folgenden umfasst: ein Zielland des vergangenen Gastes, eine Zielstadt des vergangenen Gastes, einen von dem vergangenen Gast verfügbaren Hotelnamen, Datum und Ankunftszeit des vergangenen Gastes, Staatsangehörigkeit des vergangenen Gastes, Art der von dem vergangenen Gast reservierten Belegung;

Vorverarbeiten des historischen Hotelreservierungstrainingsdatensatzes, um einen vorverarbeiteten historischen Hotelreservierungstrainingsdatensatz zu erhalten, der eine Mehrzahl vorverarbeiteter historischer Hotelaufzeichnungen umfasst, wobei jede vorverarbeitete historische Hotelaufzeichnung vorverarbeitete Reservierungsdaten darstellt, die dem vergangenen Gast zugeordnet sind, und wobei das Vorverarbeiten mindestens eines der Folgenden umfasst: Bereinigen, Imputieren fehlender Daten und Entfernen von Ausreißern;
Extrahieren einer Mehrzahl erster Merkmale aus der Mehrzahl vorverarbeiteter historischer Hotelaufzeichnungen unter Verwendung einer Merkmalsextraktionstechnik, wobei jedes erste Merkmal aus jeder vorverarbeiteten historischen Hotelaufzeichnung extrahiert wird; und
Trainieren eines Zufallswaldmodells mit der Mehrzahl erster Merkmale, um das vortrainierte Hotelvorhersagemodell zu erhalten.

8. System nach Anspruch 6, wobei der eine oder die mehreren Hardwareprozessoren (104) konfiguriert sind, um das vortrainierte Raumvorhersagemodell zu erhalten durch:

Empfangen eines historischen Raumreservierungstrainingsdatensatzes, der eine Mehrzahl historischer Raumaufzeichnungen umfasst, wobei jede historische Raumaufzeichnung Raumreservierungsdaten darstellt, die einem vergangenen Gast zugeordnet sind, und mindestens eines der Folgenden umfasst: ein Zielland des vergangenen Gastes, eine Zielstadt des vergangenen Gastes, einen von dem vergangenen Gast verfügbaren Hotelnamen, eine Art der von dem vergangenen Gast in dem Hotel verfügbaren Belegung, Datum und Ankunftszeit des vergangenen Gastes und Staatsangehörigkeit des vergangenen Gastes;
Vorverarbeiten des historischen Raumreservierungstrainingsdatensatzes, um einen vorverarbeiteten historischen Raumreservierungstrainingsdatensatz zu erhalten, der eine Mehrzahl vorverarbeiteter historischer Raumaufzeichnungen umfasst, wobei jede vorverarbeitete historische Raumaufzeichnung vorverarbeitete Raumreservierungsdaten darstellt, die dem vergangenen Gast zugeordnet sind, und wobei das Vorverarbeiten mindestens eines der Folgenden umfasst: Bereinigen, Imputieren fehlender Daten und Entfernen von Ausreißern;
Extrahieren einer Mehrzahl zweiter Merkmale aus der Mehrzahl vorverarbeiteter historischer Raumaufzeichnungen unter Verwendung einer Merkmalsextraktionstechnik, wobei jedes zweite Merkmal aus jeder vorverarbeiteten historischen Raumaufzeichnung extrahiert wird; und
Trainieren eines Zufallswaldmodells mit der Mehrzahl zweiter Merkmale, um das vortrainierte Raumvorhersagemodell zu erhalten.

9. System nach Anspruch 6, wobei der eine oder die mehreren Hardwareprozessoren (104) konfiguriert sind, um das vortrainierte Nebendienstvorhersagemodell zu erhalten durch:

Empfangen eines historischen Nebendienstreservierungstrainingsdatensatzes, der eine Mehrzahl historischer Nebendienstreservierungsaufzeichnungen umfasst, wobei jede historische Nebendienstreservierungsaufzeichnung Nebendienstreservierungsdaten darstellt, die einem vergangenen Gast zugeordnet sind, und mindestens eines der Folgenden umfasst: ein Zielland des vergangenen Gastes, eine Zielstadt des vergangenen Gastes, einen von dem vergangenen Gast verfügbaren Hotelnamen, Datum und Ankunftszeit des vergangenen Gastes, Datum und Abreisezeit des vergangenen Gastes, Staatsangehörigkeit des vergangenen Gastes, Art der von dem vergangenen Gast in dem Hotel verfügbaren Belegung und einen oder mehrere von dem vergangenen Gast verfügbare Nebendienste;
Vorverarbeiten des historischen Nebendienstreservierungstrainingsdatensatzes, um einen vorverarbeiteten historischen Nebendienstreservierungstrainingsdatensatz zu erhalten, der eine Mehrzahl vorverarbeiteter historischer Nebendienstreservierungsaufzeichnungen umfasst, wobei jede vorverarbeitete historische Nebendienstreservierungsaufzeichnung vorverarbeitete Nebendienstreservierungsdaten darstellt, die dem vergangenen Gast zugeordnet sind, und wobei das Vorverarbeiten mindestens eines der Folgenden umfasst: Bereinigen, Imputieren fehlender Daten und Entfernen von Ausreißern;
Extrahieren einer Mehrzahl dritter Merkmale aus der Mehrzahl vorverarbeiteter historischer Nebendienstreservierungsaufzeichnungen unter Verwendung einer Merkmalsextraktionstechnik, wobei jedes dritte Merkmal aus jeder vorverarbeiteten historischen Nebendienstreservierungsaufzeichnung extrahiert wird; und
Trainieren eines XG-Boost-Modells mit der Mehrzahl dritter Merkmale, um das vortrainierte Nebendienstvorhersagemodell zu erhalten.

10. System nach Anspruch 6, wobei der eine oder die mehreren Hardwareprozessoren (104) konfiguriert sind, um die Fluidpreisgestaltung für jedes des einen oder der mehreren relevanten Zusatzdienstbündel für jeden freien Raum des einen oder der mehreren freien Räume unter Verwendung der Fluidpreisgestaltungsprozedur zu bestimmen durch:

Berechnen einer Anzahl von Nebendiensten, die in jedem des einen oder der mehreren relevanten Zusatzdienstbündel vorhanden sind, für jeden freien Raum des einen oder der mehreren freien Räume;
Berechnen eines Nebendienstdurchschnitts basierend auf der Anzahl von Nebendiensten, die in jedem des einen oder der mehreren relevanten Zusatzdienstbündel vorhanden sind, für jeden freien Raum;

Berechnen (i) einer Nebendienststandardabweichung und (ii) einer Nebendienstvarianz basierend auf dem Nebendienstdurchschnitt;

Berechnen (i) einer Nebendienstkovarianz und (ii) eines Nebendienstfano-Faktors basierend auf dem Nebendienstdurchschnitt, der Nebendienststandardabweichung und der Nebendienstvarianz;

Berechnen eines Korrelationsfaktors basierend auf der Nebendienstkovarianz und dem Nebendienstfano-Faktor unter Verwendung einer Korrelationsgleichung;

Berechnen (i) einer unteren Grenze und (ii) einer oberen Grenze für jedes des einen oder der mehreren relevanten Zusatzdienstbündel unter Verwendung des Korrelationsfaktors und einer MAP-Bewertung, die mit jedem des einen oder der mehreren relevanten Zusatzdienstbündel assoziiert ist;

Klassifizieren jedes des einen oder der mehreren Zusatzdienstbündel basierend auf der unteren Grenze und der oberen Grenze, die mit dem Zusatzdienstbündel assoziiert ist, um ein deterministisches Angebot für jedes des einen oder der mehreren relevanten Zusatzdienstbündel basierend auf der Klassifizierung und einem maximalen deterministischen Angebot zu berechnen, das für jedes des einen oder der mehreren Zusatzdienstbündel definiert ist;

Bestimmen eines fluidischen Angebots für jedes des einen oder der mehreren relevanten Zusatzdienstbündel basierend auf dem deterministischen Angebot, das für jedes des einen oder der mehreren relevanten Zusatzdienstbündel berechnet wird;

Berechnen eines ausgehandelten Angebotswerts für jedes des einen oder der mehreren relevanten Zusatzdienstbündel basierend auf dem deterministischen Angebot und dem fluidischen Angebot, das mit jedem des einen oder der mehreren Zusatzdienstbündel assoziiert ist;

Berechnen eines stochastischen Angebotspreises für jedes des einen oder der mehreren Zusatzdienstbündel basierend auf dem ausgehandelten Angebotswert, der dem Zusatzdienstbündel entspricht, und einem tatsächlichen Preiswert, der dem Zusatzdienstbündel entspricht;

Berechnen eines relevanten stochastischen Zusatzdienstbündelpreises für jedes des einen oder der mehreren Zusatzdienstbündel basierend auf dem stochastischen Angebotspreis, der dem Zusatzdienstbündel entspricht, und dem tatsächlichen Preiswert, der dem Zusatzdienstbündel entspricht;

Berechnen eines linearen Angebots für jedes des einen oder der mehreren relevanten Zusatzdienstbündel basierend auf dem tatsächlichen Preiswert, der dem relevanten Zusatzdienstbündel entspricht, und dem deterministischen Angebot, das dem relevanten Zusatzdienstbündel entspricht;

Berechnen eines relevanten linearen Zusatzdienstbündelpreises für jedes des einen oder der mehreren Zusatzdienstbündel basierend auf dem tatsächlichen Preiswert, der dem relevanten Zusatzdienstbündel entspricht, und dem linearen Angebot, das dem relevanten Zusatzdienstbündel entspricht; und

Bestimmen der fluidischen Preisgestaltung für jedes des einen oder der mehreren relevanten Zusatzdienstbündel basierend auf (i) dem relevanten stochastischen Zusatzdienstbündelpreis für jedes des einen oder der mehreren Zusatzdienstbündel und (ii) dem relevanten linearen Zusatzdienstbündelpreis für jedes des einen oder der mehreren Zusatzdienstbündel.

11. Ein oder mehrere nichtflüchtige maschinenlesbare Informationsspeichermedien, die eine oder mehrere Anweisungen umfassen, die bei Ausführung durch einen oder mehrere Hardwareprozessoren (104) Folgendes bewirken:

Empfangen eines oder mehrerer Eingabeparameter für die personalisierten Gastfreundschaftsangebote von einem Gast, wobei der eine oder die mehreren Eingabeparameter Folgendes umfassen: eine Anzahl von Erwachsenen, eine Anzahl von Kindern, ein Zielland, eine Zielstadt, einen Belegungstyp, ein Datum und eine Ankunftszeit, ein Datum und eine Abreisezeit, eine oder mehrere demografische Angaben jedes Erwachsenen, eine oder mehrere demografische Angaben jedes Kindes, eine Staatsangehörigkeit jedes Erwachsenen, eine Staatsangehörigkeit jedes Kindes, einen geografischen Standort jedes Erwachsenen und einen geografischen Standort jedes Kindes;

Identifizieren eines oder mehrerer Hotels, die in der Zielstadt verfügbar sind, basierend auf dem einen oder den mehreren Eingabeparametern unter Verwendung eines vorgeschulten Hotelvorhersagemodells;

Identifizieren eines oder mehrerer freier Räume, die von dem einen oder den mehreren Hotels verfügbar sind, basierend auf dem einen oder den mehreren Eingabeparametern unter Verwendung eines vorgeschulten Raumvorhersagemodells;

Identifizieren eines oder mehrerer Zusatzdienste, die mit jedem freien Raum des einen oder der mehreren freien Räume assoziiert sind, basierend auf dem einen oder den mehreren Eingabeparametern unter Verwendung eines vorgeschulten Zusatzdienstvorhersagemodells, wobei der eine oder die mehreren Zusatzdienste, die mit jedem freien Raum assoziiert sind, die Zusatzdienste darstellen, die mit jedem freien Raum verfügbar sind;

Bilden eines oder mehrerer relevanter Zusatzdienstbündel für jeden freien Raum des einen oder der mehreren freien Räume basierend auf dem einen oder den mehreren Zusatzdiensten, die mit jedem freien Raum assoziiert sind, und unter Verwendung einer Technik der mittleren Durchschnittsgenauigkeit (Mean Average Precision, MAP), wobei das Bilden des einen oder der mehreren relevanten Zusatzdienstbündel für jeden freien Raum basierend auf dem einen oder den mehreren Zusatzdiensten, die mit jedem freien Raum assoziiert sind, und unter Verwendung der MAP-Technik Folgendes umfasst:

Zuweisen eines Rangs zu jedem des einen oder der mehreren Zusatzdienste, die mit jedem freien Raum assoziiert sind, basierend auf einer Bevölkerungsbewertung jedes des einen oder der mehreren Zusatzdienste, wobei die Bevölkerungsbewertung jedes des einen oder der mehreren Zusatzdienste durch ein vorgeschultes Bevölkerungsbewertungsvorhersagemodell erhalten wird;

Bilden einer Mehrzahl von Zusatzdienstbündeln für jeden freien Raum basierend auf dem einen oder den mehreren Zusatzdiensten, die mit jedem freien Raum assoziiert sind;

Berechnen einer MAP-Bewertung für jedes Zusatzdienstbündel der Mehrzahl von Zusatzdienstbündeln für jeden freien Raum unter Verwendung des Rangs, der jedem des einen oder der mehreren Zusatzdienste zugewiesen ist, die mit dem freien Raum assoziiert sind; und

Bilden des einen oder der mehreren Zusatzdienstbündel aus der Mehrzahl von Zusatzdienstbündeln, wobei die MAP-Bewertung für jedes Zusatzdienstbündel der Mehrzahl von Zusatzdienstbündeln größer als ein vordefinierter Schwellenwert ist, für jeden freien Raum;

Definieren einer Bewertung der mittleren Genauigkeit (Average Precision), AP, für jeden freien Raum des einen oder der mehreren freien Räume unter Verwendung einer Technik der mittleren Genauigkeit;

Berechnen einer Morphismusbewertung für jedes des einen oder der mehreren Zusatzdienstbündel für jeden freien Raum basierend auf der AP-Bewertung für jeden freien Raum und der MAP-Bewertung für das entsprechende Zusatzdienstbündel, das mit dem freien Raum assoziiert ist, unter Verwendung eines vordefinierten Morphismuskriteriums; und

Bestimmen eines oder mehrerer relevanter Zusatzdienstbündel aus dem einen oder den mehreren Zusatzdienstbündeln basierend auf der Bewertung des relevanten Zusatzdienstbündels für jedes des einen oder der mehreren Zusatzdienstbündel;

Bestimmen einer Fluidpreisgestaltung für jedes des einen oder der mehreren relevanten Zusatzdienstbündel für jeden freien Raum des einen oder der mehreren freien Räume unter Verwendung einer Fluidpreisgestaltungsprozedur, wobei sich die Fluidpreisgestaltung für jedes des einen oder der mehreren relevanten Zusatzdienstbündel basierend auf Interesse und Anforderungen des Gastes dynamisch ändert; und

Präsentieren der personalisierten Gastfreundschaftsangebote für den Gast unter Verwendung (i) des einen oder der mehreren Hotels, (ii) des einen oder der mehreren freien Räume, die von dem einen oder den mehreren Hotels verfügbar sind, (iii) des einen oder der mehreren relevanten Zusatzdienstbündel für jeden freien Raum des einen oder der mehreren freien Räume und (iv) der Fluidpreisgestaltung für jedes des einen oder der mehreren relevanten Zusatzdienstbündel für jeden freien Raum des einen oder der mehreren freien Räume,

wobei jedes des vortrainierten Hotelvorhersagemodells, des vortrainierten Raumvorhersagemodells und des vortrainierten Zusatzdienstvorhersagemodells separat auf Merkmale trainiert wird, die aus unstrukturierten historischen Trainingsdaten unter Verwendung einer Merkmalsextraktionstechnik erhalten werden.

## Revendications

1.  Procédé mis en œuvre par processeur (300) pour optimiser des offres d'hébergement personnalisées, le procédé comprenant les étapes consistant à :

    recevoir, via un ou plusieurs processeurs matériels (104), un ou plusieurs paramètres d'entrée pour les offres d'hébergement personnalisées, à partir d'un hôte, dans lequel les un ou plusieurs paramètres d'entrée comprennent : un nombre d'adultes, un nombre d'enfants, un pays de destination, une ville de destination, un type d'occupation, une date et une heure d'arrivée, une date et une heure de départ, une ou plusieurs caractéristiques démographiques de chaque adulte, une ou plusieurs caractéristiques démographiques de chaque enfant, une nationalité de chaque adulte, une nationalité de chaque enfant, un emplacement géographique de chaque adulte, et un emplacement géographique de chaque enfant (302) ;

    identifier, via les un ou plusieurs processeurs matériels (104), un ou plusieurs hôtels disponibles dans la ville de destination, sur la base des un ou plusieurs paramètres d'entrée, en utilisant un modèle de prédiction d'hôtel pré- formé (304) ;

    identifier, via les un ou plusieurs processeurs matériels (104), une ou plusieurs chambres vacantes disponibles à partir des un ou plusieurs hôtels, sur la base des un ou plusieurs paramètres d'entrée, en utilisant un modèle de prédiction de chambre pré-formé (306) ;

identifier, via les un ou plusieurs processeurs matériels (104), un ou plusieurs services auxiliaires associés à chaque chambre vacante des une ou plusieurs chambres vacantes, sur la base des un ou plusieurs paramètres d'entrée, en utilisant un modèle de prédiction de services auxiliaires pré-formé, dans lequel les un ou plusieurs services auxiliaires associés à chaque chambre vacante représentent les services auxiliaires disponibles avec chaque chambre vacante (308) ;

former, via les un ou plusieurs processeurs matériels (104), un ou plusieurs paquets de services auxiliaires pertinents, pour chaque chambre vacante des une ou plusieurs chambres vacantes, sur la base des un ou plusieurs services auxiliaires associés à chaque chambre vacante et en utilisant une technique de précision moyenne, MAP, (310), dans lequel la formation des un ou plusieurs paquets de services auxiliaires pertinents, pour chaque chambre vacante, sur la base des un ou plusieurs services auxiliaires associés à chaque chambre vacante et en utilisant la technique MAP, comprend les étapes visant à :

attribuer un rang à chacun des un ou plusieurs services auxiliaires associés à chaque chambre vacante, sur la base d'un score de population de chacun des un ou plusieurs services auxiliaires, dans lequel le score de population de chacun des un ou plusieurs services auxiliaires est obtenu par un modèle de prédiction de score de population pré-formé ;

former une pluralité de paquets de services auxiliaires, pour chaque chambre vacante, sur la base des un ou plusieurs services auxiliaires associés à chaque chambre vacante ;

calculer un score MAP pour chaque paquet de services auxiliaires de la pluralité de paquets de services auxiliaires, pour chaque chambre vacante, en utilisant le rang attribué à chacun des un ou plusieurs services auxiliaires associés à la chambre vacante ; et

former les un ou plusieurs paquets de services auxiliaires parmi la pluralité de paquets de services auxiliaires, ayant le score MAP pour chaque paquet de services auxiliaires de la pluralité de paquets de services auxiliaires supérieur à un seuil prédéfini, pour chaque chambre vacante ;

définir un score de précision moyenne, AP, pour chaque chambre vacante des une ou plusieurs chambres vacantes, en utilisant une technique de précision moyenne ;

calculer un score de morphisme pour chacun des un ou plusieurs paquets de services auxiliaires, pour chaque chambre vacante, sur la base du score AP pour chaque chambre vacante et du score MAP pour le paquet de services auxiliaires correspondant associé à la chambre vacante, en utilisant un critère de morphisme prédéfini ; et

déterminer un ou plusieurs paquets de services auxiliaires pertinents, à partir des un ou plusieurs paquets de services auxiliaires, sur la base du score de paquet de services auxiliaires pertinent pour chacun des un ou plusieurs paquets de services auxiliaires ;

déterminer, via les un ou plusieurs processeurs matériels (104), une tarification fluidique pour chacun des un ou plusieurs paquets de services auxiliaires pertinents, pour chaque chambre vacante des une ou plusieurs chambres vacantes, en utilisant une procédure de tarification fluidique (312), dans lequel la tarification fluidique pour chacun des un ou plusieurs paquets de services auxiliaires pertinents change dynamiquement sur la base d'intérêts et d'exigences de l'hôte ; et

présenter, via les un ou plusieurs processeurs matériels (104), les offres d'hébergement personnalisées à l'hôte, en utilisant (i) les un ou plusieurs hôtels, (ii) les une ou plusieurs chambres vacantes disponibles à partir des un ou plusieurs hôtels, (iii) les un ou plusieurs paquets de services auxiliaires pertinents pour chaque chambre vacante des une ou plusieurs chambres vacantes, et (iv) la tarification fluidique pour chacun des un ou plusieurs paquets de services auxiliaires pertinents, pour chaque chambre vacante des une ou plusieurs chambres vacantes (314), dans lequel chacun du modèle de prédiction d'hôtel pré-entraîné, du modèle de prédiction de chambre pré-entraînée, et du modèle de prédiction de services auxiliaires pré-entraînés est entraîné séparément sur des caractéristiques obtenues à partir de données d'entraînement historiques non structurées en utilisant une technique d'extraction de caractéristiques.

2.  Procédé selon la revendication 1, dans lequel le modèle de prédiction d'hôtel pré-entraîné est obtenu par :

la réception d'un ensemble de données d'entraînement de réservation d'hôtel historiques comprenant une pluralité d'enregistrements d'hôtel historiques, dans lequel chaque enregistrement d'hôtel historique représente des données de réservation d'hôtel associées à un hôte passé et comprenant au moins l'un parmi : un pays de destination de l'hôte passé, une ville de destination de l'hôte passé, un nom d'hôtel disponible par l'hôte passé, une date et une heure d'arrivée de l'hôte passé, une nationalité de l'hôte passé, un type d'occupation réservé par l'hôte passé ;

le prétraitement de l'ensemble de données d'entraînement de réservation d'hôtel historiques pour obtenir un ensemble de données d'entraînement de réservation d'hôtel historiques prétraité comprenant une pluralité d'enregistrements d'hôtel historiques prétraités, dans lequel chaque enregistrement d'hôtel historique prétraité représente des données de réservation prétraitées associées à l'hôte passé, et dans lequel le prétraitement comprend au moins l'un parmi : le nettoyage, l'imputation de données manquantes, et la suppression de valeurs aberrantes ;

l'extraction d'une pluralité de premières caractéristiques à partir de la pluralité d'enregistrements d'hôtel historiques prétraités, en utilisant une technique d'extraction de caractéristiques, dans lequel chaque première caractéristique est extraite à partir de chaque enregistrement d'hôtel historique prétraité ; et

l'entraînement d'un modèle de forêt aléatoire avec la pluralité de premières caractéristiques, pour obtenir le modèle de prédiction d'hôtel pré-entraîné.

3. Procédé selon la revendication 1, dans lequel le modèle de prédiction de pièce pré-entraîné est obtenu par :

la réception d'un ensemble de données d'entraînement de réservation de pièce historiques comprenant une pluralité d'enregistrements de pièce historiques, dans lequel chaque enregistrement de pièce historique représente des données de réservation de pièce associées à un hôte passé et comprenant au moins l'un parmi : un pays de destination de l'hôte passé, une ville de destination de l'hôte passé, un nom d'hôtel disponible par l'hôte passé, un type d'occupation disponible par l'hôte passé dans l'hôtel, une date et une heure d'arrivée de l'hôte passé, et une nationalité de l'hôte passé ;

le prétraitement de l'ensemble de données d'entraînement de réservation de pièce historiques pour obtenir un ensemble de données d'entraînement de réservation de pièce historiques prétraité comprenant une pluralité d'enregistrements de pièce historiques prétraités, dans lequel chaque enregistrement de pièce historique prétraité représente des données de réservation de pièce prétraitées associées à l'hôte passé, et dans lequel le prétraitement comprend au moins l'un parmi : le nettoyage, l'imputation de données manquantes, et la suppression de valeurs aberrantes ;

l'extraction d'une pluralité de secondes caractéristiques à partir de la pluralité d'enregistrements de pièce historiques prétraités, en utilisant une technique d'extraction de caractéristiques, dans lequel chaque seconde caractéristique est extraite à partir de chaque enregistrement de pièce historique prétraité ; et

l'entraînement d'un modèle de forêt aléatoire avec la pluralité de secondes caractéristiques, pour obtenir le modèle de prédiction de pièce pré-entraîné.

4. Procédé selon la revendication 1, dans lequel le modèle de prédiction de services auxiliaires pré-entraîné est obtenu par :

la réception d'un ensemble de données d'entraînement de réservation de services auxiliaires historiques comprenant une pluralité d'enregistrements de réservation de services auxiliaires historiques, dans lequel chaque enregistrement de réservation de services auxiliaires historiques représente des données de réservation de services auxiliaires associées à un hôte passé, et comprenant au moins l'un parmi : un pays de destination de l'hôte passé, une ville de destination de l'hôte passé, un nom d'hôtel disponible par l'hôte passé, une date et une heure d'arrivée de l'hôte passé, une date et une heure de départ de l'hôte passé, une nationalité de l'hôte passé, un type d'occupation disponible par l'hôte passé dans l'hôtel, les une ou plusieurs particularités démographiques de l'hôte passé, la nationalité de l'hôte passé, et un ou plusieurs services auxiliaires disponibles par l'hôte passé ;

le prétraitement de l'ensemble de données d'entraînement de réservation de services auxiliaires historiques pour obtenir un ensemble de données d'entraînement de réservation de services auxiliaires historiques prétraité comprenant une pluralité d'enregistrements de réservation de services auxiliaires historiques prétraités, dans lequel chaque enregistrement de réservation de services auxiliaires historiques prétraité représente des données de réservation de services auxiliaires prétraitées associées à l'hôte passé, et dans lequel le prétraitement comprend au moins l'un parmi : le nettoyage, l'imputation de données manquantes, et la suppression de valeurs aberrantes ;

l'extraction d'une pluralité de troisièmes caractéristiques à partir de la pluralité d'enregistrements de réservation de services auxiliaires historiques prétraités, en utilisant une technique d'extraction de caractéristiques, dans lequel chaque troisième caractéristique est extraite à partir de chaque enregistrement de réservation de services auxiliaires historiques prétraité ; et

l'entraînement d'un modèle XGBoost avec la pluralité de troisièmes caractéristiques, pour obtenir le modèle de prédiction de services auxiliaires pré-entraîné.

**5.** Procédé selon la revendication 1, dans lequel la détermination de la tarification fluidique pour chacun des un ou plusieurs paquets de services auxiliaires pertinents, pour chaque chambre vacante des une ou plusieurs chambres vacantes, en utilisant la procédure de tarification fluidique, comprend :

le calcul d'un nombre de services auxiliaires présents dans chacun des un ou plusieurs paquets de services auxiliaires pertinents, pour chaque chambre vacante des une ou plusieurs chambres vacantes ;

le calcul d'une moyenne de services auxiliaires, sur la base du nombre de services auxiliaires présents dans chacun des un ou plusieurs paquets de services auxiliaires pertinents, pour chaque chambre vacante ;

le calcul (i) d'un écart-type de services auxiliaires et (ii) d'une variance de services auxiliaires, sur la base de la moyenne de services auxiliaires ;

le calcul (i) d'une covariance de services auxiliaires et (ii) d'un facteur Fano de services auxiliaires, sur la base de la moyenne de services auxiliaires, de l'écart-type de services auxiliaires, et de la variance de services auxiliaires ;

le calcul d'un facteur de corrélation, sur la base de la covariance de services auxiliaires et du facteur Fano de services auxiliaires, en utilisant une équation de corrélation ;

le calcul (i) d'une limite inférieure, et (ii) d'une limite supérieure, pour chacun des un ou plusieurs paquets de services auxiliaires pertinents, en utilisant le facteur de corrélation et un score MAP associé à chacun des un ou plusieurs paquets de services auxiliaires pertinents ;

la classification de chacun des un ou plusieurs paquets de services auxiliaires, sur la base de la limite inférieure, et de la limite supérieure associée au paquet de services auxiliaires pertinent, pour calculer une offre déterministe pour chacun des un ou plusieurs paquets de services auxiliaires pertinents, sur la base de la classification et d'une offre déterministe maximale définie pour chacun des un ou plusieurs paquets de services auxiliaires ;

la détermination d'une offre fluidique pour chacun des un ou plusieurs paquets de services auxiliaires pertinents, sur la base de l'offre déterministe calculée pour chacun des un ou plusieurs paquets de services auxiliaires pertinents ;

le calcul d'une valeur d'offre négociée pour chacun des un ou plusieurs paquets de services auxiliaires pertinents, sur la base de l'offre déterministe et de l'offre fluidique associée à chacun des un ou plusieurs paquets de services auxiliaires ;

le calcul d'un prix d'offre stochastique pour chacun des un ou plusieurs paquets de services auxiliaires, sur la base de la valeur d'offre négociée correspondant au paquet de services auxiliaires et d'une valeur de prix réelle correspondant au paquet de services auxiliaires ;

le calcul d'un prix de paquet de services auxiliaires stochastique pertinent pour chacun des un ou plusieurs paquets de services auxiliaires, sur la base du prix d'offre stochastique correspondant au paquet de services auxiliaires et de la valeur de prix réelle correspondant au paquet de services auxiliaires ;

le calcul d'une offre linéaire pour chacun des un ou plusieurs paquets de services auxiliaires pertinents, sur la base de la valeur de prix réelle correspondant au paquet de services auxiliaires pertinent et de l'offre déterministe correspondant au paquet de services auxiliaires pertinent ;

le calcul d'un prix de paquet de services auxiliaires linéaire pertinent pour chacun des un ou plusieurs paquets de services auxiliaires, sur la base de la valeur de prix réelle correspondant au paquet de services auxiliaires pertinent et de l'offre linéaire correspondant au paquet de services auxiliaires pertinent ; et

la détermination de la tarification fluidique pour chacun des un ou plusieurs paquets de services auxiliaires pertinents, sur la base (i) du prix de paquet de services auxiliaires stochastique pertinent pour chacun des un ou plusieurs paquets de services auxiliaires, et (ii) du prix de paquet de services auxiliaires linéaire pertinent pour chacun des un ou plusieurs paquets de services auxiliaires.

**6.** Système (100) pour optimiser des offres d'hébergement personnalisées, le système (100) comprenant :

une mémoire (102) stockant des instructions ;

une ou plusieurs interfaces d'entrée/sortie, E/S, (106) ; et

un ou plusieurs processeurs matériels (104) couplés à la mémoire (102) via les une ou plusieurs interfaces E/S (106), dans lequel les un ou plusieurs processeurs matériels (104) sont configurés par les instructions pour :

recevoir un ou plusieurs paramètres d'entrée pour les offres d'hébergement personnalisées, à partir d'un hôte, dans lequel les un ou plusieurs paramètres d'entrée comprennent : un nombre d'adultes, un nombre d'enfants, un pays de destination, une ville de destination, un type d'occupation, une date et une heure d'arrivée, une date et une heure de départ, une ou plusieurs caractéristiques démographiques de chaque adulte, une ou plusieurs caractéristiques démographiques de chaque enfant, une nationalité de chaque adulte, une nationalité de chaque enfant, un emplacement géographique de chaque adulte, et un emplacement géographique de chaque enfant ;

identifier un ou plusieurs hôtels disponibles dans la ville de destination, sur la base des un ou plusieurs paramètres d'entrée, en utilisant un modèle de prédiction d'hôtel pré-formé ;

identifier une ou plusieurs chambres vacantes disponibles à partir des un ou plusieurs hôtels, sur la base des un ou plusieurs paramètres d'entrée, en utilisant un modèle de prédiction de chambre pré-formé ;

identifier un ou plusieurs services auxiliaires associés à chaque chambre vacante des une ou plusieurs chambres vacantes, sur la base des un ou plusieurs paramètres d'entrée, en utilisant un modèle de prédiction de services auxiliaires pré-formé, dans lequel les un ou plusieurs services auxiliaires associés à chaque chambre vacante représentent les services auxiliaires disponibles avec chaque chambre vacante ;

former un ou plusieurs paquets de services auxiliaires pertinents, pour chaque chambre vacante des une ou plusieurs chambres vacantes, sur la base des un ou plusieurs services auxiliaires associés à chaque chambre vacante et en utilisant la technique de précision moyenne, MAP, dans lequel les un ou plusieurs processeurs matériels (104) sont configurés pour former les un ou plusieurs paquets de services auxiliaires pertinents, pour chaque chambre vacante, sur la base des un ou plusieurs services auxiliaires associés à chaque chambre vacante et en utilisant la technique MAP, par :

> attribuer un rang à chacun des un ou plusieurs services auxiliaires associés à chaque chambre vacante, sur la base d'un score de population de chacun des un ou plusieurs services auxiliaires, dans lequel le score de population de chacun des un ou plusieurs services auxiliaires est obtenu par un modèle de prédiction de score de population pré-formé ;
>
> former une pluralité de paquets de services auxiliaires, pour chaque chambre vacante, sur la base des un ou plusieurs services auxiliaires associés à chaque chambre vacante ;
>
> calculer un score MAP pour chaque paquet de services auxiliaires de la pluralité de paquets de services auxiliaires, pour chaque chambre vacante, en utilisant le rang attribué à chacun des un ou plusieurs services auxiliaires associés à la chambre vacante ; et
>
> former les un ou plusieurs paquets de services auxiliaires parmi la pluralité de paquets de services auxiliaires, ayant le score MAP pour chaque paquet de services auxiliaires de la pluralité de paquets de services auxiliaires supérieur à un seuil prédéfini, pour chaque chambre vacante ;
>
> définir un score de précision moyenne (AP), pour chaque chambre vacante des une ou plusieurs chambres vacantes, en utilisant une technique de précision moyenne ;
>
> calculer un score de morphisme pour chacun des un ou plusieurs paquets de services auxiliaires, pour chaque chambre vacante, sur la base du score de précision moyenne (AP) pour chaque chambre vacante et du score MAP pour le paquet de services auxiliaires correspondant associé à la chambre vacante, en utilisant un critère de morphisme prédéfini ; et
>
> déterminer un ou plusieurs paquets de services auxiliaires pertinents, à partir des un ou plusieurs paquets de services auxiliaires, sur la base du score de paquet de services auxiliaires pertinent pour chacun des un ou plusieurs paquets de services auxiliaires ;

déterminer une tarification fluidique pour chacun des un ou plusieurs paquets de services auxiliaires pertinents, pour chaque chambre vacante des une ou plusieurs chambres vacantes, en utilisant une procédure de tarification fluidique, dans lequel la tarification fluidique pour chacun des un ou plusieurs paquets de services auxiliaires pertinents change dynamiquement sur la base d'intérêts et d'exigences de l'hôte ; et

présenter les offres d'hébergement personnalisées à l'hôte, en utilisant (i) les un ou plusieurs hôtels, (ii) les une ou plusieurs chambres vacantes disponibles à partir des un ou plusieurs hôtels, (iii) les un ou plusieurs paquets de services auxiliaires pertinents pour chaque chambre vacante des une ou plusieurs chambres vacantes, et (iv) la tarification fluidique pour chacun des un ou plusieurs paquets de services auxiliaires pertinents, pour chaque chambre vacante des une ou plusieurs chambres vacantes,

dans lequel chacun du modèle de prédiction d'hôtel pré-entraîné, du modèle de prédiction de chambre pré-entraînée, et du modèle de prédiction de services auxiliaires pré-entraînés est entraîné séparément sur des caractéristiques obtenues à partir de données d'entraînement historiques non structurées en utilisant une technique d'extraction de caractéristiques.

7. Système selon la revendication 6, dans lequel les un ou plusieurs processeurs matériels (104) sont configurés pour obtenir le modèle de prédiction d'hôtel pré-entraîné, par :

la réception d'un ensemble de données d'entraînement de réservation d'hôtel historiques comprenant une pluralité d'enregistrements d'hôtel historiques, dans lequel chaque enregistrement d'hôtel historique représente des données de réservation d'hôtel associées à un hôte passé et comprenant au moins l'un parmi : un pays de destination de l'hôte passé, une ville de destination de l'hôte passé, un nom d'hôtel disponible par l'hôte passé, une date et une heure d'arrivée de l'hôte passé, une nationalité de l'hôte passé, un type d'occupation réservé par l'hôte passé ;

le prétraitement de l'ensemble de données d'entraînement de réservation d'hôtel historiques pour obtenir un ensemble de données d'entraînement de réservation d'hôtel historiques prétraité comprenant une pluralité d'enregistrements d'hôtel historiques prétraités, dans lequel chaque enregistrement d'hôtel historique prétraité représente des données de réservation prétraitées associées à l'hôte passé, et dans lequel le prétraitement comprend au moins l'un parmi : le nettoyage, l'imputation de données manquantes, et la suppression de valeurs aberrantes ;

l'extraction d'une pluralité de premières caractéristiques à partir de la pluralité d'enregistrements d'hôtel historiques prétraités, en utilisant une technique d'extraction de caractéristiques, dans lequel chaque première caractéristique est extraite à partir de chaque enregistrement d'hôtel historique prétraité ; et

l'entraînement d'un modèle de forêt aléatoire avec la pluralité de premières caractéristiques, pour obtenir le modèle de prédiction d'hôtel pré-entraîné.

8. Système selon la revendication 6, dans lequel les un ou plusieurs processeurs matériels (104) sont configurés pour obtenir le modèle de prédiction de pièce pré-entraîné, par :

la réception d'un ensemble de données d'entraînement de réservation de pièce historiques comprenant une pluralité d'enregistrements de pièce historiques, dans lequel chaque enregistrement de pièce historique représente des données de réservation de pièce associées à un hôte passé et comprenant au moins l'un parmi : un pays de destination de l'hôte passé, une ville de destination de l'hôte passé, un nom d'hôtel disponible par l'hôte passé, un type d'occupation disponible par l'hôte passé dans l'hôtel, une date et une heure d'arrivée de l'hôte passé, et une nationalité de l'hôte passé ;

le prétraitement de l'ensemble de données d'entraînement de réservation de pièce historiques pour obtenir un ensemble de données d'entraînement de réservation de pièce historiques prétraité comprenant une pluralité d'enregistrements de pièce historiques prétraités, dans lequel chaque enregistrement de pièce historique prétraité représente des données de réservation de pièce prétraitées associées à l'hôte passé, et dans lequel le prétraitement comprend au moins l'un parmi : le nettoyage, l'imputation de données manquantes, et la suppression de valeurs aberrantes ;

l'extraction d'une pluralité de secondes caractéristiques à partir de la pluralité d'enregistrements de pièce historiques prétraités, en utilisant une technique d'extraction de caractéristiques, dans lequel chaque seconde caractéristique est extraite à partir de chaque enregistrement de pièce historique prétraité ; et

l'entraînement d'un modèle de forêt aléatoire avec la pluralité de secondes caractéristiques, pour obtenir le modèle de prédiction de pièce pré-entraîné.

9. Système selon la revendication 6, dans lequel les un ou plusieurs processeurs matériels (104) sont configurés pour obtenir le modèle de prédiction de services auxiliaires pré-entraîné, par :

la réception d'un ensemble de données d'entraînement de réservation de services auxiliaires historiques comprenant une pluralité d'enregistrements de réservation de services auxiliaires historiques, dans lequel chaque enregistrement de réservation de services auxiliaires historiques représente des données de réservation de services auxiliaires associées à un hôte passé, et comprenant au moins l'un parmi : un pays de destination de l'hôte passé, une ville de destination de l'hôte passé, un nom d'hôtel disponible par l'hôte passé, une date et une heure d'arrivée de l'hôte passé, une date et une heure de départ de l'hôte passé, une nationalité de l'hôte passé, un type d'occupation disponible par l'hôte passé dans l'hôtel, et un ou plusieurs services auxiliaires disponibles par l'hôte passé ;

le prétraitement de l'ensemble de données d'entraînement de réservation de services auxiliaires historiques pour obtenir un ensemble de données d'entraînement de réservation de services auxiliaires historiques prétraité comprenant une pluralité d'enregistrements de réservation de services auxiliaires historiques prétraités, dans lequel chaque enregistrement de réservation de services auxiliaires historiques prétraité représente des données de réservation de services auxiliaires prétraitées associées à l'hôte passé, et dans lequel le prétraitement comprend au moins l'un parmi : le nettoyage, l'imputation de données manquantes, et la suppression de valeurs aberrantes ;

l'extraction d'une pluralité de troisièmes caractéristiques à partir de la pluralité d'enregistrements de réservation de services auxiliaires historiques prétraités, en utilisant une technique d'extraction de caractéristiques, dans lequel chaque troisième caractéristique est extraite à partir de chaque enregistrement de réservation de services auxiliaires historiques prétraité ; et

l'entraînement d'un modèle XGBoost avec la pluralité de troisièmes caractéristiques, pour obtenir le modèle de prédiction de services auxiliaires pré-entraîné.

10. Système selon la revendication 6, dans lequel les un ou plusieurs processeurs matériels (104) sont configurés pour déterminer la tarification fluidique pour chacun des un ou plusieurs paquets de services auxiliaires pertinents, pour chaque chambre vacante des une ou plusieurs chambres vacantes, en utilisant la procédure de tarification fluidique, par :

le calcul d'un nombre de services auxiliaires présents dans chacun des un ou plusieurs paquets de services auxiliaires pertinents, pour chaque chambre vacante des une ou plusieurs chambres vacantes ;

le calcul d'une moyenne de services auxiliaires, sur la base du nombre de services auxiliaires présents dans chacun des un ou plusieurs paquets de services auxiliaires pertinents, pour chaque chambre vacante ;

le calcul (i) d'un écart-type de services auxiliaires et (ii) d'une variance de services auxiliaires, sur la base de la moyenne de services auxiliaires ;

le calcul (i) d'une covariance de services auxiliaires et (ii) d'un facteur Fano de services auxiliaires, sur la base de la moyenne de services auxiliaires, de l'écart-type de services auxiliaires, et de la variance de services auxiliaires ;

le calcul d'un facteur de corrélation, sur la base de la covariance de services auxiliaires et du facteur Fano de services auxiliaires, en utilisant une équation de corrélation ;

le calcul (i) d'une limite inférieure, et (ii) d'une limite supérieure, pour chacun des un ou plusieurs paquets de services auxiliaires pertinents, en utilisant le facteur de corrélation et un score MAP associé à chacun des un ou plusieurs paquets de services auxiliaires pertinents ;

la classification de chacun des un ou plusieurs paquets de services auxiliaires, sur la base de la limite inférieure, et du paquet de services auxiliaires associé à la limite supérieure, pour calculer une offre déterministe pour chacun des un ou plusieurs paquets de services auxiliaires pertinents, sur la base de la classification et d'une offre déterministe maximale définie pour chacun des un ou plusieurs paquets de services auxiliaires ;

la détermination d'une offre fluidique pour chacun des un ou plusieurs paquets de services auxiliaires pertinents, sur la base de l'offre déterministe calculée pour chacun des un ou plusieurs paquets de services auxiliaires pertinents ;

le calcul d'une valeur d'offre négociée pour chacun des un ou plusieurs paquets de services auxiliaires pertinents, sur la base de l'offre déterministe et de l'offre fluidique associée à chacun des un ou plusieurs paquets de services auxiliaires ;

le calcul d'un prix d'offre stochastique pour chacun des un ou plusieurs paquets de services auxiliaires, sur la base de la valeur d'offre négociée correspondant au paquet de services auxiliaires et d'une valeur de prix réelle correspondant au paquet de services auxiliaires ;

le calcul d'un prix de paquet de services auxiliaires stochastique pertinent pour chacun des un ou plusieurs paquets de services auxiliaires, sur la base du prix d'offre stochastique correspondant au paquet de services auxiliaires et de la valeur de prix réelle correspondant au paquet de services auxiliaires ;

le calcul d'une offre linéaire pour chacun des un ou plusieurs paquets de services auxiliaires pertinents, sur la base de la valeur de prix réelle correspondant au paquet de services auxiliaires pertinent et de l'offre déterministe correspondant au paquet de services auxiliaires pertinent ;

le calcul d'un prix de paquet de services auxiliaires linéaire pertinent pour chacun des un ou plusieurs paquets de services auxiliaires, sur la base de la valeur de prix réelle correspondant au paquet de services auxiliaires pertinent et de l'offre linéaire correspondant au paquet de services auxiliaires pertinent ; et

la détermination de la tarification fluidique pour chacun des un ou plusieurs paquets de services auxiliaires pertinents, sur la base (i) du prix de paquet de services auxiliaires stochastique pertinent pour chacun des un ou plusieurs paquets de services auxiliaires, et (ii) du prix de paquet de services auxiliaires linéaire pertinent pour chacun des un ou plusieurs paquets de services auxiliaires.

11. Un ou plusieurs supports de stockage d'informations lisibles par machine non transitoires comprenant une ou plusieurs instructions qui, lorsqu'elles sont exécutées par un ou plusieurs processeurs matériels (104), amènent :

à recevoir un ou plusieurs paramètres d'entrée pour les offres d'hébergement personnalisées, à partir d'un hôte, dans lequel les un ou plusieurs paramètres d'entrée comprennent : un nombre d'adultes, un nombre d'enfants, un pays de destination, une ville de destination, un type d'occupation, une date et une heure d'arrivée, une date et une heure de départ, une ou plusieurs caractéristiques démographiques de chaque adulte, une ou plusieurs caractéristiques démographiques de chaque enfant, une nationalité de chaque adulte, une nationalité de chaque enfant, un emplacement géographique de chaque adulte, et un emplacement géographique de chaque enfant ;

à identifier un ou plusieurs hôtels disponibles dans la ville de destination, sur la base des un ou plusieurs paramètres d'entrée, en utilisant un modèle de prédiction d'hôtel pré-formé ;

à identifier une ou plusieurs chambres vacantes disponibles à partir des un ou plusieurs hôtels, sur la base des un ou plusieurs paramètres d'entrée, en utilisant un modèle de prédiction de chambre pré-formé ;

à identifier un ou plusieurs services auxiliaires associés à chaque chambre vacante des une ou plusieurs chambres vacantes, sur la base des un ou plusieurs paramètres d'entrée, en utilisant un modèle de prédiction de services auxiliaires pré-formé, dans lequel les un ou plusieurs services auxiliaires associés à chaque chambre vacante représentent les services auxiliaires disponibles avec chaque chambre vacante ;

à former un ou plusieurs paquets de services auxiliaires pertinents, pour chaque chambre vacante des une ou plusieurs chambres vacantes, sur la base des un ou plusieurs services auxiliaires associés à chaque chambre vacante et en utilisant une technique de précision moyenne (MAP), dans lequel la formation des un ou plusieurs paquets de services auxiliaires pertinents, pour chaque chambre vacante, sur la base des un ou plusieurs services auxiliaires associés à chaque chambre vacante et en utilisant la technique MAP, comprend :

l'attribution d'un rang à chacun des un ou plusieurs services auxiliaires associés à chaque chambre vacante, sur la base d'un score de population de chacun des un ou plusieurs services auxiliaires, dans lequel le score de population de chacun des un ou plusieurs services auxiliaires est obtenu par un modèle de prédiction de score de population pré-formé ;

la formation d'une pluralité de paquets de services auxiliaires, pour chaque chambre vacante, sur la base des un ou plusieurs services auxiliaires associés à chaque chambre vacante ;

le calcul d'un score MAP pour chaque paquet de services auxiliaires de la pluralité de paquets de services auxiliaires, pour chaque chambre vacante, en utilisant le rang attribué à chacun des un ou plusieurs services auxiliaires associés à la chambre vacante ; et

la formation des un ou plusieurs paquets de services auxiliaires parmi la pluralité de paquets de services auxiliaires, ayant le score MAP pour chaque paquet de services auxiliaires de la pluralité de paquets de services auxiliaires supérieur à un seuil prédéfini, pour chaque chambre vacante ;

la définition d'un score de précision moyenne, AP, pour chaque chambre vacante des une ou plusieurs chambres vacantes, en utilisant une technique de précision moyenne ;

le calcul d'un score de morphisme pour chacun des un ou plusieurs paquets de services auxiliaires, pour chaque chambre vacante, sur la base du score AP pour chaque chambre vacante et du score MAP pour le paquet de services auxiliaires correspondant associé à la chambre vacante, en utilisant un critère de morphisme prédéfini ; et

la détermination d'un ou plusieurs paquets de services auxiliaires pertinents, à partir des un ou plusieurs paquets de services auxiliaires, sur la base du score de paquet de services auxiliaires pertinent pour chacun des un ou plusieurs paquets de services auxiliaires ;

la détermination d'une tarification fluidique pour chacun des un ou plusieurs paquets de services auxiliaires pertinents, pour chaque chambre vacante des une ou plusieurs chambres vacantes, en utilisant une procédure de tarification fluidique, dans lequel la tarification fluidique pour chacun des un ou plusieurs paquets de services auxiliaires pertinents change dynamiquement sur la base d'intérêts et d'exigences de l'hôte ; et

la présentation, des offres d'hébergement personnalisées à l'hôte, en utilisant (i) les un ou plusieurs hôtels, (ii) les une ou plusieurs chambres vacantes disponibles à partir des un ou plusieurs hôtels, (iii) les un ou plusieurs paquets de services auxiliaires pertinents pour chaque chambre vacante des une ou plusieurs chambres vacantes, et (iv) la tarification fluidique pour chacun des un ou plusieurs paquets de services auxiliaires pertinents, pour chaque chambre vacante des une ou plusieurs chambres vacantes,

dans lequel chacun du modèle de prédiction d'hôtel pré-entraîné, du modèle de prédiction de chambre pré-entraînée, et du modèle de prédiction de services auxiliaires pré-entraînés est entraîné séparément sur des caractéristiques obtenues à partir de données d'entraînement historiques non structurées en utilisant une technique d'extraction de caractéristiques.

System **100**

**108**

Memory **102**

Modules **102a**

Repository **102b**

I/O interface(s) **106**

Hardware
processor(s) **104**

FIG. 1

FIG. 2

300

Receive one or more input parameters for the personalized hospitality offerings, from a guest, wherein the one or more input parameters comprising: a number of adults, a number of children, a destination country, a destination city, a type of occupancy, date and time of arrival, date and time of departure, one or more demographic particulars of each adult, one or more demographic particulars of each child, nationality of each adult, nationality of each child, a geographic location of each adult, and a geographic location of each child **302**

Identify one or more hotels available in the destination city, based on the one or more input parameters, using a pre-trained hotel prediction model **304**

Identify one or more vacant rooms available from the one or more hotels, based on the one or more input parameters, using a pre-trained room prediction model **306**

Identify one or more ancillary services associated with each vacant room of the one or more vacant rooms, based on the one or more input parameters, using a pre-trained ancillary services prediction model, wherein the one or more ancillary services associated with each vacant room represents the ancillary services available with each vacant room **308**

A

## FIG. 3A

300

A

Form one or more relevant ancillary service bundles, for each vacant room of the one or more vacant rooms, based on the one or more ancillary services associated with each vacant room and using a mean average precision (MAP) technique **310**

Determine a fluidic pricing for each of the one or more relevant ancillary service bundles, for each vacant room of the one or more vacant rooms, using a fluidic pricing procedure **312**

Present the personalized hospitality offerings to the guest, using (i) the one or more hotels, (ii) the one or more vacant rooms available from the one or more hotels, (iii) the one or more relevant ancillary service bundles for each vacant room of the one or more vacant rooms, and (iv) the fluidic pricing for each of the one or more relevant ancillary service bundles, for each vacant room of the one or more vacant rooms **314**

FIG. 3B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202121052596

- US 2021117998 A1